Europäisches Patentamt
European Patent Office
Office européen des brevets

(19)

(11) Veröffentlichungsnummer: **0 223 739**
**A1**

(12) # EUROPÄISCHE PATENTANMELDUNG

(21) Anmeldenummer: 86810495.1

(22) Anmeldetag: 31.10.86

(51) Int. Cl.⁴: **C 07 F 9/48**
C 07 F 9/65, G 03 C 1/10

(30) Priorität: 06.11.85 CH 4762/85

(43) Veröffentlichungstag der Anmeldung:
27.05.87 Patentblatt 87/22

(84) Benannte Vertragsstaaten:
BE DE FR GB IT NL

(71) Anmelder: **CIBA-GEIGY AG**
**Klybeckstrasse 141**
**CH-4002 Basel (CH)**

(72) Erfinder: **Leppard, David D., Dr.**
**Route de Bourguillon 6**
**CH-1723 Marly (CH)**

(54) **Neue Dibenzoxaphosphorine.**

(57) Die neuen Dibenzoxaphosphorine entsprechen der Formel I

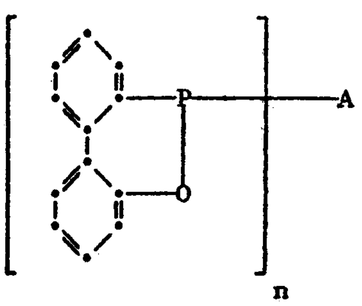

(I).

Für die Bedeutung der Symbole A und n wird auf Anspruch 1 verwiesen.

Sie sind zum Stabilisieren von Magentakuppler enthaltendem photographischem Material geeignet.

EP 0 223 739 A1

**Beschreibung**

Neue Dibenzoxaphosphorine

Die vorliegende Erfindung betrifft neue Dibenzoxaphosphorine, deren Herstellung sowie deren Verwendung zum Stabilisieren von Magentakuppler enthaltendem photographischem Material durch Einarbeitung eines Dibenzoxaphosphorins in die den Kuppler enthaltenden Emulsions- oder in eine an sie angrenzenden Kolloidschicht.

Gewisse Dibenzoxaphosphorine, die den erfindungsgemässen Verbindungen strukturell ähnlich sind. sind in der EP-A1 0 000 352 als Stabilisatoren für Kunststoffe beschrieben.

Ein grosses Problem bei der Dunkellagerung photographischer Materialien, die mindestens einen Magentakuppler enthalten, besteht darin, dass infolge der Zersetzung dieses Kupplers eine Vergilbung erfolgt (siehe dazu R.J. Tuite: "Image Stability in Color Photography", J.Appl. Photogr. Eng. 5, 200, 1979). Ferner führt diese Zersetzung zu einer verminderten Farbstoffbildung bei der Kupplungsreaktion und als Folge davon zu einer veränderten Wiedergabe verschiedener Farbtöne.

Es wurde deshalb bereits versucht, dieses Problem zu lösen. So wird beispielsweise in der japanischen Offenlegungsschrift 52/082 219 ein chromogenes farbphotographisches Material beschrieben, bei dem die erwähnte Vergilbung durch die Anwesenheit gewisser Polyvinylimidazole verringert wird. In der japanischen Offenlegungsschrift 53/108 428 wird ein farbphotographisches Material offenbart, das zu diesem Zweck substituierte Phosphorsäure(4-hydroxy)anilide, in der japanischen Offenlegungsschrift 57/204 036 ein solches, das Brenzkatechin-dialkylether enthält und in der japanischen Auslegeschrift 48-32728 ein solches das Alkyl- und/oder Arylphosphite enthält.

Trotzdem ist es bis heute nicht gelungen, das Problem in befriedigender Weise zu lösen, da diese Verbindungen nur eine geringe Wirkung haben. Es wurde nun überraschenderweise gefunden, dass bestimmte neue Verbindungen, genannt Dibenzoxaphosphorine, die bei der Dunkellagerung durch den Magentakuppler bewirkte Vergilbung weitgehend verhindern.

Gegenstand der vorliegenden Erfindung sind daher Verbindungen der Formel I

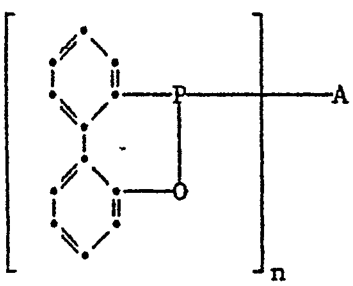

(I),

worin n die Zahl 1 oder 2 bedeutet und A. wenn n = 1 ist, eine Gruppe der Formel II

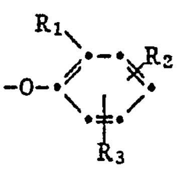

(II)

ist. worin $R_1$ einen Rest $Z_1$ bedeutet. wobei $Z_1$ für $C_1$-$C_{18}$Alkyl, $C_5$-$C_6$Cycloalkyl, Cl, Br, CN, $C_7$-$C_{21}$Aralkyl oder $C_2$-$C_8$Alkylen-CO-Y steht,

oder $R_1$ $-CH_2-\overset{O}{\overset{\|}{P}}-(OR_{11})_2$ oder eine Gruppe der Formel

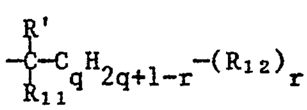

ist. worin R' Wasserstoff oder $C_1$-$C_4$Alkyl bedeutet,

$R_{11}$ $C_1$-$C_4$Alkyl ist, $R_{12}$ Cl, Br, $-\overset{O}{\overset{\|}{P}}-(OR_{11})_2$, -SR''', -SO-R''', $-SO_2R'''$, -CO-R''', $-NH-CO-NH_2$, $-NH-COOR_{11}$, $-SO_2-NH_2$, $-NH-SO_2-NH_2$, $-O-SO_2-R'''$ oder $NO_2$ bedeutet, q eine Zahl von 1 bis 10 ist, und r 1 oder 2 bedeutet, oder

$R_1$ eine Gruppe der Formel III

$-X-\overset{O}{\overset{\|}{C}}-Y$ (III)

ist, worin X eine direkte Bindung, $-CH_2-$, $C_2$-$C_8$Alkylen, das mit einem Rest -CO-Y substituiert ist, -CH=CH-, -CH=C(C≡N)- oder -CH=C(CO-Y)- bedeutet, und Y eine Gruppe $-OR_4$, $-N(R_5)(R_6)$ oder $C_1$-$C_4$Alkyl ist, oder wenn X eine direkte Bindung oder $-CH_2-$ ist, kann Y den Rest

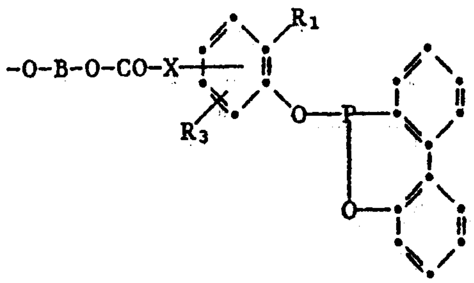

oder

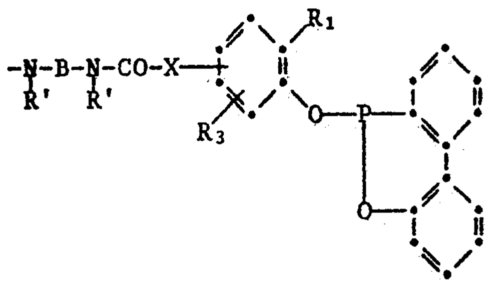

bedeuten, wobei X im Rest ebenfalls eine direkte Bindung oder $-CH_2-$ist, B ein ununterbrochenes oder ein- oder mehrmals durch -O- oder -S- unterbrochenes $C_1$-$C_{18}$Alkylen, eine Gruppe der Formel

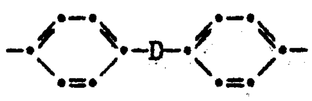

oder eine Gruppe der Formel

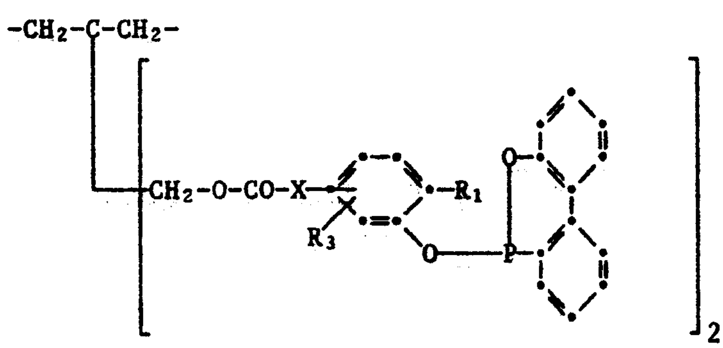

bedeutet, $R_1$ und R' die zuvor genannte Bedeutung haben und D eine direkte Bindung, $-CH_2-$, $-C(CH_3)_2-$, -O- oder -CO- ist,
$R_2$ Wasserstoff, eine Gruppe $-OR_7$, $-SR_8$, -N(R')(R"), $-(CH_2)_m-OR_8$, $-(CH_2)_m-S-C(S)-N(R')_2$ oder eine Gruppe der Formeln

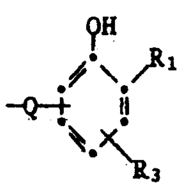

oder

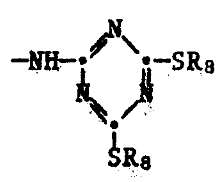

ist, oder $R_2$ die gleiche Bedeutung wie $R_1$ hat, wobei $R_7$ Wasserstoff, $C_1$-$C_4$Alkyl, -CO-R'", $-SO_2$-R'", -COOR'", -CO-N(R')(R'"), $C_1$-$C_{18}$Alkylen-$COOR_8$, $-CO-COOR_{13}$, $-Si(R_{13})_3$ oder die Gruppe

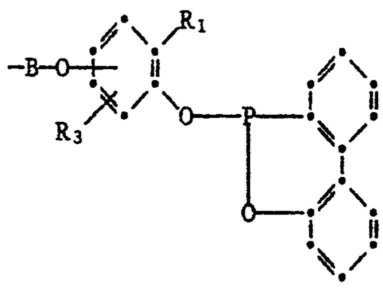

oder

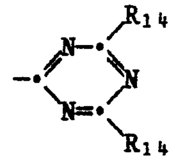

.

bedeutet, R' die zuvor genannte Bedeutung hat, R" $C_1$-$C_4$Alkyl, $-SO_2-R'''$, -CO-R''' oder -COOR''' ist, R''' Wasserstoff, $C_1$-$C_{18}$Alkyl, Phenyl, Tolyl oder Benzyl ist, $R_8$ $C_1$-$C_{18}$Alkyl, $-CH_2-O-CH_3$, $-CH_2CH_2-COOR_4$, $C_3$-$C_8$Alkenyl, Phenyl oder Benzyl bedeutet, m eine Zahl von 1 bis 4 ist, Q eine direkte Bindung, -S-, -CH(R')-, $-CH_2-C(CO-Y)_2-CH_2-$ oder die Gruppe

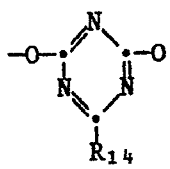

bedeutet, $R_{13}$ gleich oder verschieden ist und $C_1$-$C_{18}$Alkyl, $C_5$-$C_6$Cycloalkyl, Phenyl oder Benzyl bedeutet, und $R_{14}$ einen Rest $-OR_4$, $-N(R_5)(R_6)$ oder $-SR_8$ bedeutet,
$R_3$ Wasserstoff ist oder die gleiche Bedeutung wie $R_1$ hat, wobei $R_2$ oder $R_3$ als -X-CO-OAlkyl($C_1$-$C_{18}$) oder

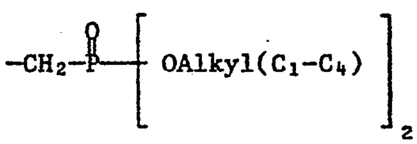 nicht in 4-Stellung steht,

wenn die beiden anderen Substituenten beide Alkyl oder Aralkyl bedeuten, sowie unter der Bedingung, dass, wenn $R_1$ einen Rest $Z_1$ darstellt, $R_2$ nicht gleichzeitig Wasserstoff, -OH, -OAlkyl($C_1$-$C_4$) oder $Z1_1$ sein kann, und $R_3$ nicht gleichzeitig Wasserstoff oder $Z_1$ sein kann, oder
$R_2$ und $R_3$ zusammen einen zweiwertigen Rest $Z_2$ bilden, wobei $Z_2$ $C_3$-$C_8$Alkylen oder eine Gruppe

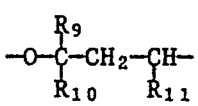

bedeutet und $R_9$, $R_{10}$ und $R_{11}$ unabhängig voneinander für $C_1$-$C_4$Alkyl stehen,
unter der Bedingung, dass, wenn $R_2$ und $R_3$ zusammen den Rest $Z_2$ bilden, $R_1$ nicht dem Rest $Z_1$ entspricht,
$R_4$ ein ununterbrochenes oder ein- oder mehrmals durch -O-unterbrochenes $C_1$-$C_{18}$Alkyl, ein Polyäthylenglykolrest, Phenyl, substituiertes Phenyl, oder Benzyl ist,
$R_5$ und $R_6$ unabhängig voneinander Wasserstoff, $C_1$-$C_{18}$Alkyl, Phenyl, substituiertes Phenyl, Benzyl oder eine Gruppe $-(CH_2)_m-OR_8$ bedeuten, und

A, wenn n=2 ist, eine Gruppe der Formel IV

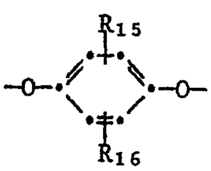

(IV)

bedeutet, worin $R_{15}$ und $R_{16}$ unabhängig voneinander $C_1$-$C_{18}$Alkyl oder eine Gruppe der Formel III sind, unter der Bedingung, dass mindestens einer der Reste $R_{15}$ und $R_{16}$ eine Gruppe der Formel III ist, oder
A eine Gruppe der Formeln V-VIII

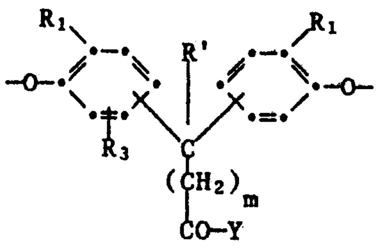

,

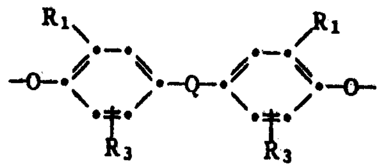

,

(V)

(VI)

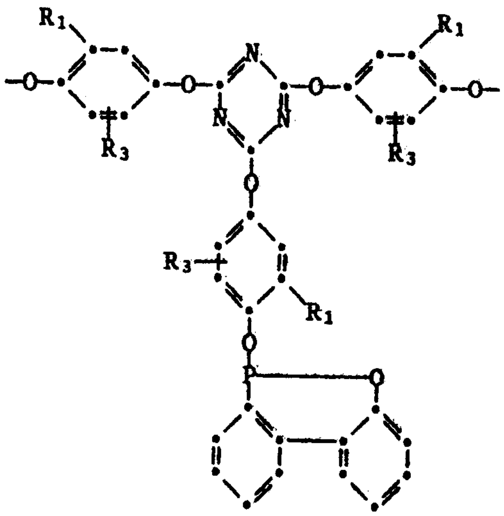

(VII)

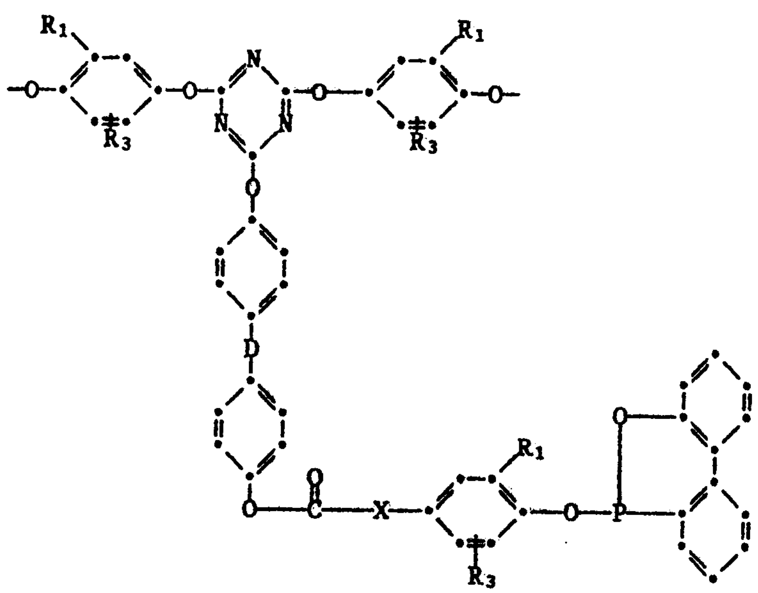

(VIII)

bedeutet, worin $R_1$, $R_3$, R', X, D, Y, Q und m die zuvor genannte Bedeutung haben.

Etwaige Substituenten bedeuten als $C_1$-$C_{18}$Alkyl geradkettiges oder vezweigtes Alkyl, z.B. Methyl, Aethyl, Propyl, i-Propyl, Butyl, i-Butyl, t-Butyl, Amyl, 1,1-Dimethylpropyl, 1,1,3,3-Tetramethylbutyl, 1-Methylpentyl, Hexyl, Heptyl, n-Octyl, 2-Aethylhexyl, n-Nonyl, Isononyl, Decyl, t-Decyl, Undecyl, Dodecyl, Tetradecyl, Hexadecyl, Octadecyl. $R_1$, $R_2$, $R_{15}$ und $R_{16}$ sind als Alkyl bevorzugt verzweigtes Alkyl mit 4 bis 8 Kohlenstoffatomen und insbesondere tert.-Butyl oder 1,1,3,3-Tetramethylbutyl. $R_4$ ist bevorzugt geradkettiges Alkyl mit 4 bis 12 Kohlenstoffatomen und insbesondere n-Hexyl.

R', R", $R_7$, $R_9$, $R_{10}$ und $R_{11}$ sind als $C_1$-$C_4$Alkyl beispielsweise Methyl, Aethyl, Propyl, i-Propyl, Butyl, i-Butyl, t-Butyl. Bevorzugt sind sie Methyl.

Bedeuten etwaige Substituenten $C_5$-$C_6$Cycloalkyl, so handelt es sich um Cyclopentyl und insbesondere um Cyclohexyl.

R''' als $C_3$-$C_8$Alkenyl ist beispielsweise Allyl, Methallyl oder 1-Hexenyl. Bevorzugt ist Allyl.

Als $C_7$-$C_{21}$Aralkyl bedeuten etwaige Substituenten z.B. unsubstituiertes oder ein- oder zweimal mit Methyl, Aethyl, Propyl, i-Propyl, n-Butyl, i-Butyl oder t-Butyl im Phenylkern substituiertes Benzyl sowie insbesondere α,α-Dimethylbenzyl.

Wenn $R_2$ und $R_3$ zusammen $C_3$-$C_8$Alkylen bilden, so handelt es sich z.B. um Trimethylen, Tetramethylen und insbesondere um die Gruppe $-C(CH_3)_2-CH_2-C(CH_3)_2-$.

Wenn $R_2$ und $R_3$ zusammen eine Gruppe

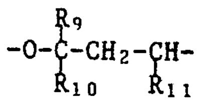

bilden, so handelt es sich insbesondere um die Gruppe

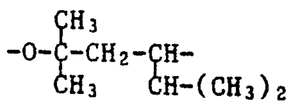

B bedeutet als $C_1$-$C_{18}$Alkylen beispielsweise Methylen, Aethylen, 1,2-Propylen, Trimethylen, Hexamethylen, Dodecamethylen, Octadecamethylen, 1,2-Hexylen, $-(CH_2CH_2-O)_2CH_2CH_2-$ oder $-CH_2CH_2-S-CH_2CH_2-$ und insbesondere Aethylen, Trimethylen, Tetramethylen, Pentamethylen oder Hexamethylen.

$R_4$, $R_5$ oder $R_6$ als substituiertes Phenyl bedeutet beispielsweise einen Phenylrest substituiert mit einer $C_1$-$C_{12}$Alkoxy- und/oder mit einer oder mehreren $C_1$-$C_{12}$Alkylgruppen, mit Halogen, wie z.B. Chlor, Brom, oder mit Phenyl, Aralkyl, wie z.B. Benzyl, oder an zwei benachbarten C-Atomen mit $-(CH_2)_3$; so zum Beispiel können $R_4$, $R_5$ oder $R_6$ als substituiertes Phenyl 4-Methoxyphenyl, 4-Aethoxyphenyl, 3,5-Dimethylphenyl, 4-Benzylphenyl, 4-n-Dodecylphenyl oder 4-Chlorphenyl sein.

Von besonderem Interesse sind Dibenzoxaphosphorine der Formel I, worin

A, wenn n = 1 ist, eine Gruppe der Formel II

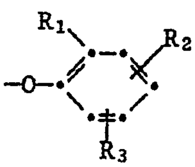

(II)

st, worin $_1$ einen Rest $Z_1$ bedeutet, wobei $Z_1$ für $C_1$-$C_{18}$Alkyl, $C_5$-$C_6$Cycloalkyl, Cl, Br, CN, $C_7$-$C_{21}$Aralkyl oder $C_2$-$C_8$Alkylen-CO-Y

steht, oder $R_1$ $-CH_2-\overset{O}{\overset{\|}{P}}-(OR_{11})_2$ oder eine Gruppe der Formel

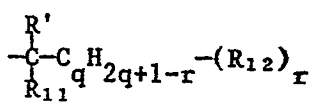

ist, worin R' Wasserstoff oder $C_1$-$C_4$Alkyl bedeutet,

$R_{11}$ $C_1$-$C_4$Alkyl ist, $R_{12}$ Cl, Br, $-\overset{O}{\overset{\|}{P}}-(OR_{11})_2$, -SR''', -SO-R''', $-SO_2R'''$, $-SO_2R'''$, -CO-R''', $-NH-CO-NH_2$, $-NH-COOR_{11}$, $-SO_2-NH_2$, $-NH-SO_2-NH_2$, $-O-SO_2-R'''$ oder $NO_2$ bedeutet, q eine Zahl von 1 bis 10 ist, und r 1 oder 2 bedeutet, oder

$R_1$ eine Gruppe der Formel III

$-X-\overset{O}{\overset{\|}{C}}-Y$ (III)

ist, worin X eine direkte Bindung, $-CH_2-$, $C_2$-$C_8$Alkylen, das mit einem Rest -CO-Y substituiert ist, -CH=CH-, -CH=C(C≡N)- oder -CH=C(CO-Y)- bedeutet, und Y eine Gruppe $-OR_4$, $-N(R_5)(R_6)$ oder $C_1$-$C_4$Alkyl ist,

$R_2$ Wasserstoff, eine Gruppe $-OR_7$, $-SR_8$, -N(R')(R''), $-(CH_2)_m-OR_8$ $-(CH_2)_m-S-\overset{S}{\overset{\|}{C}}-N(R')_2$, eine Gruppe der Formeln

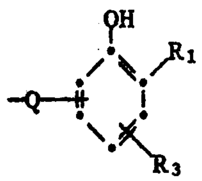

oder

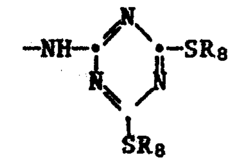

ist, oder $R_2$ die gleiche Bedeutung wie $R_1$ hat, wobei $R_7$ Wasserstoff, $C_1$-$C_4$Alkyl, -CO-R''', -$SO_2$-R''', -COOR''', -CO-N(R')(R''') oder $C_1$-$C_{18}$Alkylen-$COOR_8$ bedeutet, R' die zuvor genannte Bedeutung hat, R'' $C_1$-$C_4$Alkyl oder -CO-R''' ist, R''' Wasserstoff, $C_1$-$C_{18}$Alkyl, Phenyl oder Benzyl ist, $R_8$ $C_1$-$C_{18}$Alkyl bedeutet, m eine Zahl von 1 bis 4 ist, Q eine direkte Bindung, -S-, -CH(R')- oder -$CH_2$-C(CO-Y)$_2$-$CH_2$-bedeutet,
$R_3$ Wasserstoff ist oder die gleiche Bedeutung wie $R_1$ hat, wobei $R_2$ oder $R_3$ als -X-CO-O Alkyl ($C_1$-$C_{18}$) oder $-CH_2-\overset{O}{\overset{\|}{P}}-[OAlkyl(C_1-C_4)]_2$ nicht in 4-Stellung steht, wenn die beiden anderen Substituenten beide Alkyl oder Aralkyl bedeuten, sowie unter der Bedingung, dass, wenn $R_1$ einen Rest $Z_1$ darstellt, $R_2$ nicht gleichzeitig Wasserstoff, -OH, -OAlkyl($C_1$-$C_4$) oder $Z_1$ sein kann, und $R_3$ nicht gleichzeitig Wasserstoff oder $Z_1$ sein kann,
$R_4$ ein ununterbrochenes oder ein- oder mehrmals durch -O-unterbrochenes $C_1$-$C_{18}$Alkyl, ein Polyäthylenglykolrest, Phenyl, substituiertes Phenyl, Benzyl oder eine Gruppe der Formel

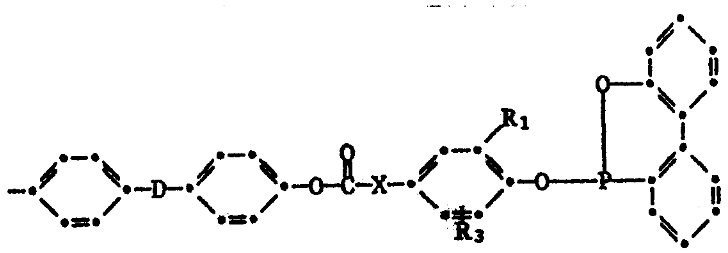

ist, worin $R_1$, $R_3$ und X die zuvor genannte Bedeutung haben und D eine direkte Bindung, -$CH_2$-, -C($CH_3$)$_2$-, -O- oder -CO- ist,
$R_5$ und $R_6$ unabhängig voneinander Wasserstoff, $C_1$-$C_{18}$Alkyl, Phenyl, Benzyl oder eine Gruppe $-(CH_2)_m-OR_8$ bedeuten, und
A, wenn n = 2 ist, eine Gruppe der Formeln V-VII

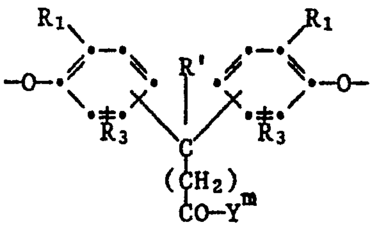

(V)

,

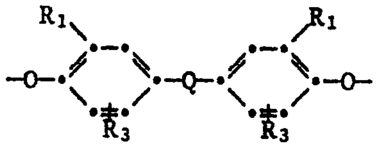

(VI)

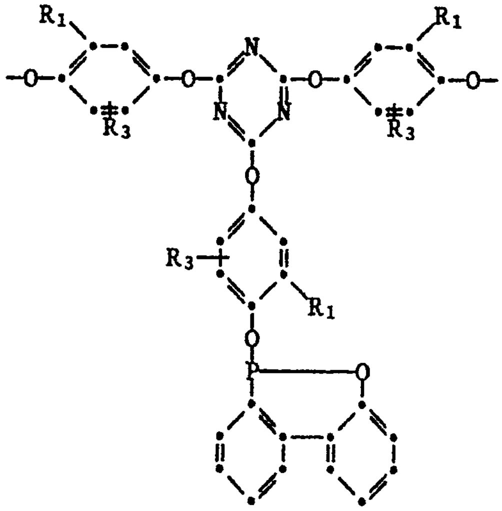

(VII)

bedeutet, worin $R_1$, $R_3$, R', Y, Q und m die zuvor genannte Bedeutung haben.

Bevorzugt sind Dibenzoxaphosphorine der Formel I, worin A, wenn n = 1 ist, eine Gruppe der Formel II bedeutet, worin $R_1$ eine Gruppe

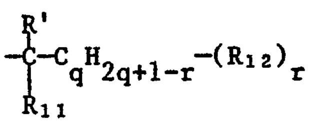 ist,

und $R_2$ und $R_3$ unabhängig voneinander Wasserstoff, $C_1$-$C_4$Alkyl oder eine Gruppe wie $R_1$ bedeuten.

Besonders bevorzugt sind Dibenzoxaphosphorine der Formel I, worin A, wenn n = 1 ist, eine Gruppe der Formel II bedeutet, worin $R_1$ $C_1$-$C_{18}$Alkyl, $C_5$-$C_6$Cycloalkyl, $C_7$-$C_{21}$Aralkyl oder $C_2$-$C_8$Alkylen-CO-Y ist und $R_2$ -$SR_8$, -N(R')(R") oder $OR_7$ bedeutet, wobei $R_7$ für -CO-R'", -$SO_2$-R"', -COOR'", -CO-N(R')(R"), $C_1$-$C_8$Alkylen-$COOR_8$, -CO-CO-$OR_{13}$, $Si(R_{13})_3$ oder die Gruppe

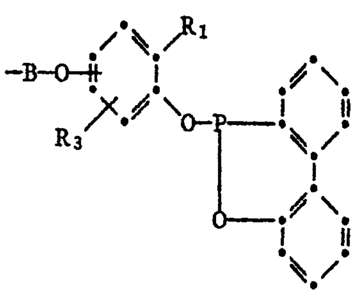

oder

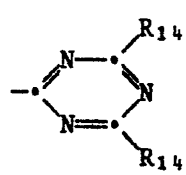

bedeutet, worin die Symbole die vorhin genannte Bedeutung haben,
und ganz besonders bevorzugt sind davon Dibenzoxaphosphorine der Formel I, worin $R_1$ $C_2$-$C_8$Alkylen-CO-Y bedeutet und $R_2$ für $OR_7$ steht, wobei Y -OAlkyl($C_1$-$C_{18}$) ist und $R_7$ -CO-R'", -$SO_2$-R'", -COOR'", -CO-CO-$OR_{13}$ oder -$Si(R_{13})_3$ bedeutet, R'" $C_1$-$C_{18}$Alkyl, Phenyl, Tolyl oder Benzyl ist und $R_{13}$ unabhängig voneinander $C_1$-$C_{18}$Alkyl, Phenyl oder Benzyl ist.

Ebenfalls bevorzugt sind Dibenzoxaphosphorine der Formel I, welche der Formel

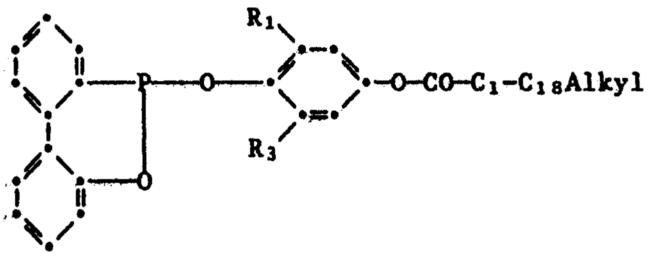

entsprechen, worin $R_1$ und $R_3$ die zuvor genannte Bedeutung haben, oder welche der Formel

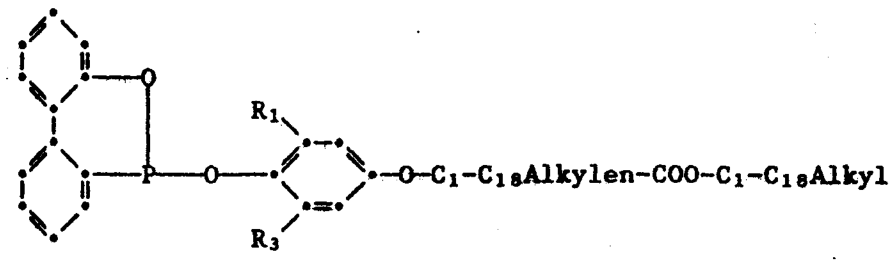

entsprechen, worin $R_1$ und $R_3$ die zuvor genannte Bedeutung haben.

Bevorzugt sind ferner Dibenzoxaphosphorine der Formel I, worin A, wenn n = 2 ist, eine Gruppe der Formel VI bedeutet, worin $R_1$, $R_3$ und Q die zuvor genannte Bedeutung haben.

Besonders bevorzugt sind Dibenzoxaphosphorine der Formel I, worin A, wenn n = 2 ist, eine Gruppe der Formel VII bedeutet, worin $R_1$ und $R_3$ die zuvor genannte Bedeutung haben.

Ebenfalls bevorzugt sind Dibenzoxaphosphorine der Formel I, worin A, wenn n = 2 ist, eine Gruppe der Formel VIII bedeutet, worin $R_1$, $R_3$, D und X die in Anspruch 1 genannte Bedeutung haben.

Besonders zu erwähnen sind Verbindungen der Formel I, die eine Gruppe der Formel II enthalten, worin mindestens zwei der Substituenten $R_1$, $R_2$ oder $R_3$ für -X-CO-OAlkyl($C_1$-$C_{18}$) und/oder

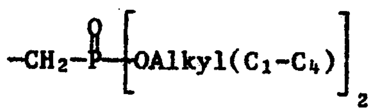

stehen.

Als nicht limitierende Beispiele von Verbindungen der Formel I seien die folgenden Verbindungen in den nachstehenden Tabellen genannt:

Tabelle I

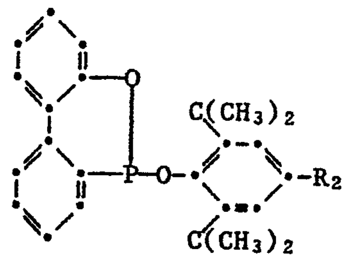

| Verbindung Nr. | $R_2$ |
|---|---|
| 1 | $-CH(-CO-OCH_3)-CH_2-COOCH_3$ |
| 2 | $-NH-CO-CH_3$ |
| 3 | 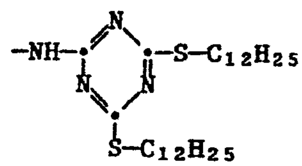 |
| 4 | $-O-CH_2-COO-C_2H_5$ |
| 5 | $-O-CO-CH_3$ |
| 6 | $-CH(-COO-C_2H_5)-CH_2-COO-C_2H_5$ |
| 7 | $-CH_2CH(-COO-C_2H_5)_2$ |
| 8 | $-O-CH_2-COO-C_{12}H_{25}$ |
| 9 | $-O-CO-C_{11}H_{23}$ |
| 10 | $-O-CO-CO-OCH_3$ |
| 11 | $-O-Si(CH_3)_3$ |
| 12 | 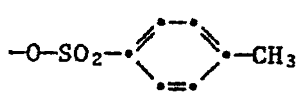 |
| 13 | $-S-CH_2-O-CH_3$ |
| 14 | $-S-CH_2CH_2-COO-CH_2-CH=CH_2$ |
| 15 | $-S-CH_2-CH=CH_2$ |

Tabelle I (Fortsetzung)

| Verbindung Nr. | $R_2$ |
|---|---|
| 16 | 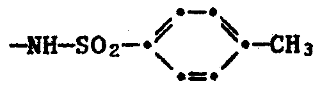 |
| 17 | 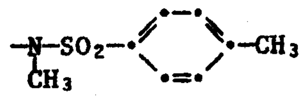 |
| 18 | 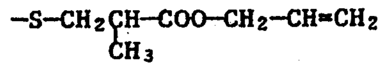 |
| 19 | 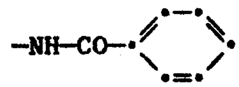 |
| 20 | 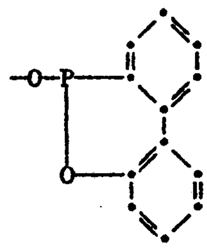 |

Tabelle II

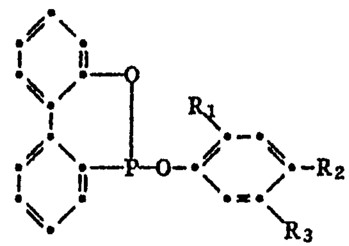

| Verbindung Nr. | $R_1$ | $R_2$ | $R_3$ |
|---|---|---|---|
| 21 | $-C(CH_3)_2-C(CH_3)_2-CH_3$ | $-S-C(CH_3)_2CH_2-C(CH_3)_2CH_3$ | H |
| 22 | $-C(CH_3)_2-(CH_2)_3-COOCH_3$ | $-O-CO-CH_3$ | H |
| 23 | $-C(CH_3)_2-(CH_2)_3-COOCH_3$ | $-O-CO-CH_3$ | $-C(CH_3)_2-(CH_2)_3-COOCH_3$ |
| 24 | $-C(CH_3)_2-(CH_2)_2-P(=O)-(OCH_3)_2$ | $-CH_3$ | H |
| 25 | $-C(CH_3)_3$ | $-O-CH(C_{12}H_{25})-COOCH_2CH_3$ | H |
| 26 | $-C(CH_3)_2-(CH_2)_3-COO-C_6H_{13}$ | $-O-SO_2-$ 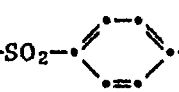 $-CH_3$ | $-C(CH_3)_2-(CH_2)_3-COO-C_6H_{13}$ |
| 27 | $-C(CH_3)_2-(CH_2)_3-COO-C_6H_{13}$ | $-O-Si(CH_3)_3$ | $-C(CH_3)_2-(CH_2)_3-COO-C_6H_{13}$ |

Tabelle III

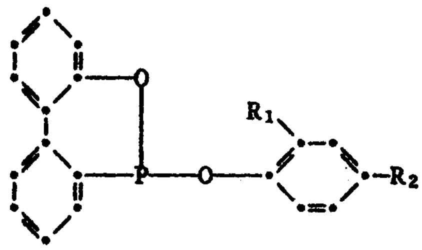

| Verbindung Nr. | $R_1$ | $R_2$ |
|---|---|---|
| 28 | $-C(CH_3)_3$ | $-O-CO-CH_3$ |
| 29 | $-C(CH_3)_3$ | $-O-CH_2-COO-C_2H_5$ |
| 30 | $-C(CH_3)_3$ | $-O-CH-COO-C_2H_5$<br>$C_{12}H_{25}$ |
| 31 | $-C(CH_3)_2-(CH_2)_3-COOCH_3$ | $-O-CH_2-COO-C_2H_5$ |
| 32 | $-C(CH_3)_2-(CH_2)_3-COOCH_3$ | $-O-CO-CO-OCH_3$ |
| 33 | $-C(CH_3)_2-CH_2-C(CH_3)_3$ | $-O-CO-CH_3$ |
| 34 | $-C(CH_3)_2-CH_2-C(CH_3)_3$ | $-O-CH_2-COO-C_2H_5$ |
| 35 | $-C(CH_3)_2-CH_2-C(CH_3)_3$ | $-O-CO-C_{11}H_{23}$ |
| 36 | $-C(CH_3)_3$ | $-O-CO-C_{11}H_{23}$ |
| 37 | $-C(CH_3)_3$ | $-O-CH_2-COO-C_{12}H_{25}$ |
| 38 | $-C(CH_3)_2-CH_2-C(CH_3)_3$ | $-O-CH_2-COO-C_{12}H_{25}$ |

Tabelle IV

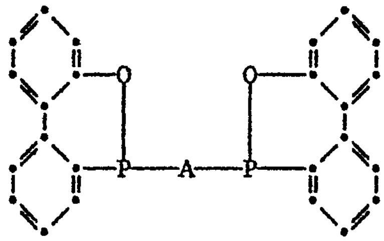

| Verbindung Nr. | A | der Formel |
|---|---|---|
| 39 | 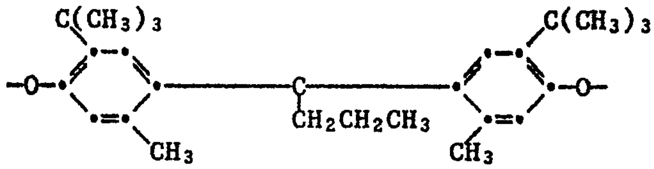 | VI |
| 40 | 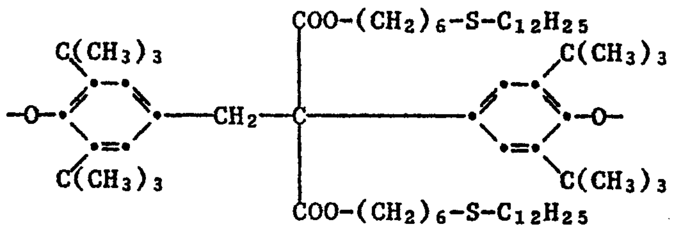 | VI |

Tabelle IV (Fortsetzung)

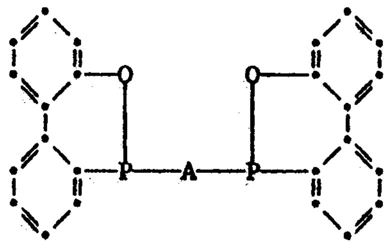

| Verbindung Nr. | A | der Formel |
|---|---|---|
| 41 | 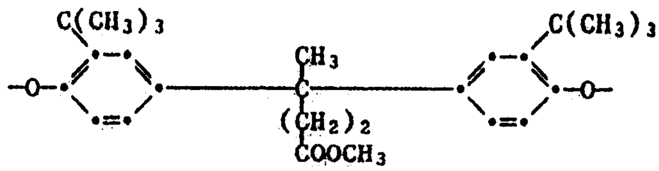 | V |
| 42 | 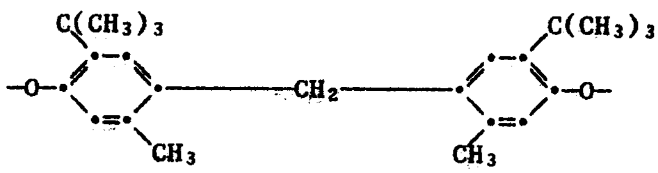 | VI |

Die neuen Dibenzoxaphosphorine der Formel I können in Analogie zu üblichen Methoden, beispielsweise durch Umsetzung eines Phenols der Formel IX

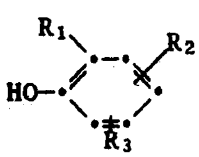 (IX)

oder eines Hydrochinons der Formel X

oder eines Hydrochinons der Formel X

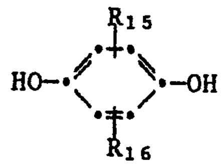

(X)

mit einem bzw. zwei Mol 6-Chlorodibenz-[c.e][1,2]-oxophosphorin, wie z.B in Beispiel 1 beschrieben, unter Erhitzen hergestellt werden.

Die erfindungsgemässen Dibenzoxaphosphorine der Formel I sind geeignete Stabilisatoren für photographische Materialien, welche einen Magentakuppler enthalten.

Ein weiterer Gegenstand vorliegender Erfindung ist demnach ein Verfahren zum Stabilisieren von Magentakuppler enthaltendem photographischem Material, das dadurch gekennzeichnet ist, dass in die den Magentakuppler enthaltende Emulsions- oder in eine an sie angrenzende Kolloidschicht mindestens eine Verbindung der Formel I

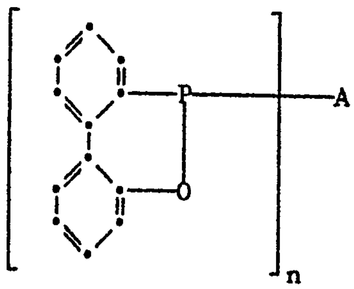

(I)

eingearbeitet wird, worin A und n die zuvor genannte Bedeutung haben.

Ebenfalls ein Gegenstand der vorliegenden Erfindung sind Zusammensetzungen enthaltend ein photographisches Material, einen Magentakuppler und mindestens eine Verbindung der Formel I

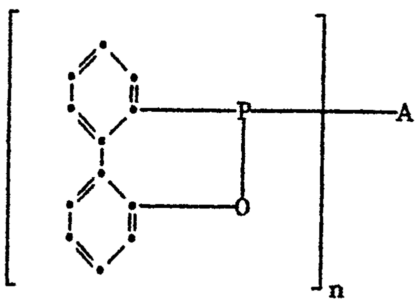

(I)

worin n die Zahl 1 oder 2 bedeutet und A, wenn n = 1 ist, eine Gruppe der Formel II

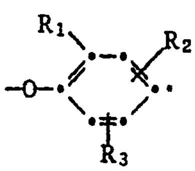

(II)

ist, worin $R_1$ einen Rest $Z_1$ bedeutet, wobei $Z_1$ für $C_1$-$C_{18}$Alkyl, $C_5$-$C_6$Cycloalkyl, Cl, Br, CN, $C_7$-$C_{21}$Aralkyl oder $C_2$-$C_8$Alkylen-CO-Y steht, oder $R_1$

$-CH_2-\overset{O}{\overset{\|}{P}}-(OR_{11})_2$ oder eine Gruppe der Formel

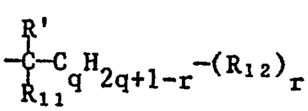

ist, worin R' Wasserstoff oder $C_1$-$C_4$Alkyl bedeutet,
$R_{11}$ $C_1$-$C_4$Alkyl ist, $R_{12}$ Cl, Br,
$-\overset{O}{\overset{\|}{P}}-(OR_{11})_2$,
-SR''', -SO-R''', $-SO_2R'''$, -CO-R''', $-NH-CO-NH_2$, $-NH-COOR_{11}$, $-SO_2NH_2$, $-NH-SO_2-NH_2$, $-O-SO_2-R'''$ oder $NO_2$

bedeutet, q eine Zahl von 1 bis 10 ist, und r 1 oder 2 bedeutet, oder $R_1$ eine Gruppe der Formel III

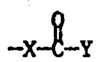 (III)

ist, worin X eine direkte Bindung, $-CH_2-$, $C_2$-$C_8$Alkylen, das mit einem Rest -CO-Y substituiert ist, -CH=CH-, -CH=C(C≡N)- oder -CH=C(CO-Y)- bedeutet,und Y eine Gruppe $-OR_4$, $-N(R_5)(R_6)$ oder $C_1$-$C_4$Alkyl ist, oder wenn X eine direkte Bindung oder $-CH_2-$ ist kann Y den Rest

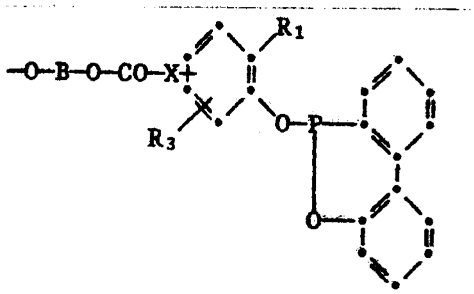

oder

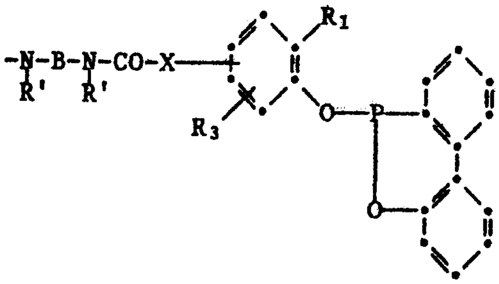

bedeuten, wobei X im Rest ebenfalls eine direkte Bindung oder $-CH_2-$ist, B ein ununterbrochenes oder ein- oder mehrmals durch -O- oder -S- unterbrochenes $C_1$-$C_{18}$Alkylen, eine Gruppe der Formel

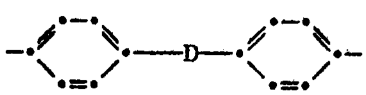

oder eine Gruppe der Formel

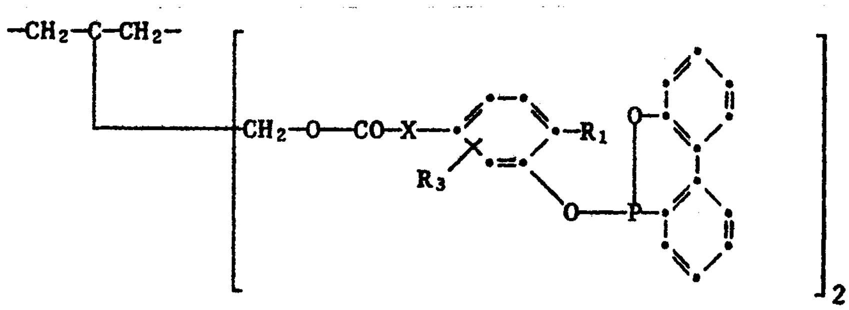

bedeutet,
$R_1$ und R' die zuvor genannte Bedeutung haben und D eine direkte Bindung, $-CH_2-$, $-C(CH_3)_2-$, -O- oder -CO- ist,
$R_2$ Wasserstoff, eine Gruppe $-OR_7$, $-SR_8$, -N(R')(R"), $-(CH_2)_m-OR_8$

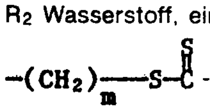 -N(R')$_2$ oder eine Gruppe der Formeln

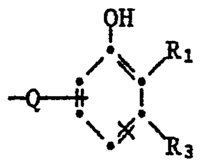

oder

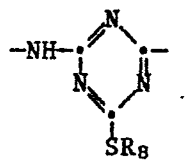

ist, oder $R_2$ die gleiche Bedeutung wie $R_1$ hat, wobei $R_7$ Wasserstoff, $C_1$-$C_4$Alkyl, -CO-R''', -$SO_2$-R''', -COOR''', -CO-N(R')(R'''), $C_1$-$C_{18}$Alkylen-$COOR_8$, -CO-$COOR_{13}$, -Si$(R_{13})_3$ oder die Gruppe

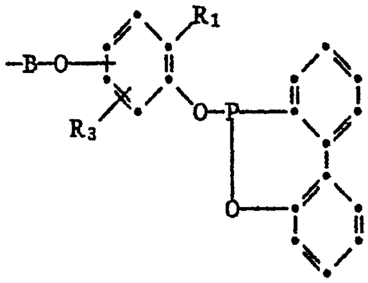

oder

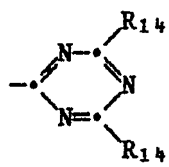

bedeutet, R' die zuvor genannte Bedeutung hat, R'' $C_1$-$C_4$Alkyl, -$SO_2$-R''', -CO-R''' oder - COOR''' ist, R''' Wasserstoff, $C_1$-$C_{18}$Alkyl, Phenyl, Tolyl oder Benzyl ist, $R_8$ $C_1$-$C_{18}$Alkyl, -$CH_2$-O-$CH_3$, -$CH_2CH_2$-$COOR_4$, $C_3$-$C_8$Alkenyl, Phenyl oder Benzyl bedeutet, m eine Zahl von 1 bis 4 ist, Q eine direkte Bindung, -S-, -CH(R')-, -$CH_2$-C(CO-Y) $CH_2$- oder die Gruppe

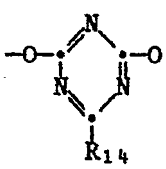

bedeutet, $R_{13}$ gleich oder verschieden ist und $C_1$-$C_{18}$Alkyl, $C_5$-$C_6$Cycloalkyl, Phenyl oder Benzyl bedeutet, und $R_{14}$ einen Rest -$OR_4$, -N$(R_5)(R_6)$ oder -$SR_8$ bedeutet, $R_3$ Wasserstoff ist oder die gleiche Bedeutung wie $R_1$ hat, unter der Bedingung, dass, wenn $R_1$ einen Rest $Z_1$ darstellt, $R_2$ nicht gleichzeitig Wasserstoff, -OH, -OAlkyl($C_1$-$C_4$) oder $Z_1$ sein kann, und $R_3$ nicht gleichzeitig Wasserstoff oder $Z_1$ sein kann, oder $R_2$ und $R_3$ zusammen einen zweiwertigen Rest $Z_2$ bilden, wobei $Z_2$ $C_3$-$C_8$Alkylen oder eine Gruppe

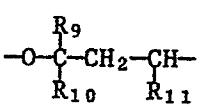

bedeutet und $R_9$, $R_{10}$ und $R_{11}$ unabhängig voneinander für $C_1$-$C_4$Alkyl stehen,
unter der Bedingung, dass, wenn $R_2$ und $R_3$ zusammen den Rest $Z_2$ bilden, $R_1$ nicht dem Rest $Z_1$ entspricht,
$R_4$ ein ununterbrochenes oder ein- oder mehrmals durch -O-unterbrochenes $C_1$-$C_{18}$Alkyl, ein Polyäthylenglykolrest, Phenyl, substituiertes Phenyl, oder Benzyl ist,
$R_5$ und $R_6$ unabhängig voneinander Wasserstoff, $C_1$-$C_{18}$Alkyl, Phenyl, substituiertes Phenyl, Benzyl oder eine Gruppe $-(CH_2)_m-OR_8$ bedeuten, und

A, wenn n=2 ist, eine Gruppe der Formel IV

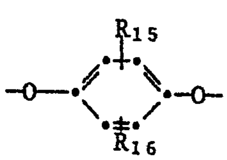

(IV)

bedeutet, worin $R_{15}$ und $R_{16}$ unabhängig voneinander $C_1$-$C_{18}$Alkyl oder eine Gruppe der Formel III sind, unter der Bedingung, dass mindestens einer der Reste $R_{15}$ und $R_{16}$ eine Gruppe der Formel III ist, oder
A eine Gruppe der Formeln V-VIII

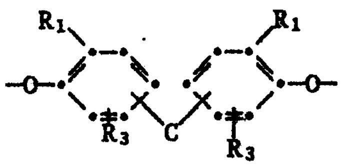

,

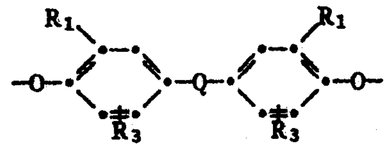

,

(V) (VI)

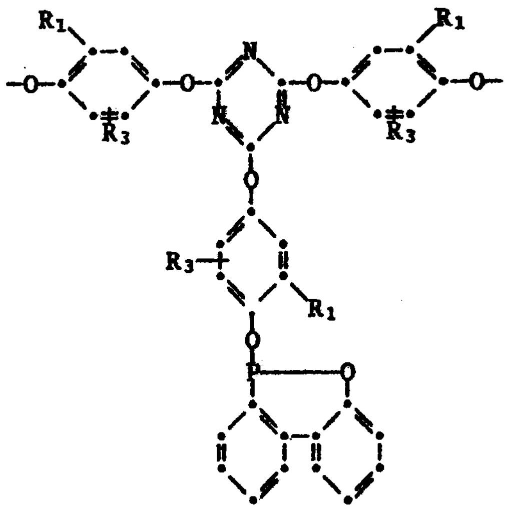

(VII)

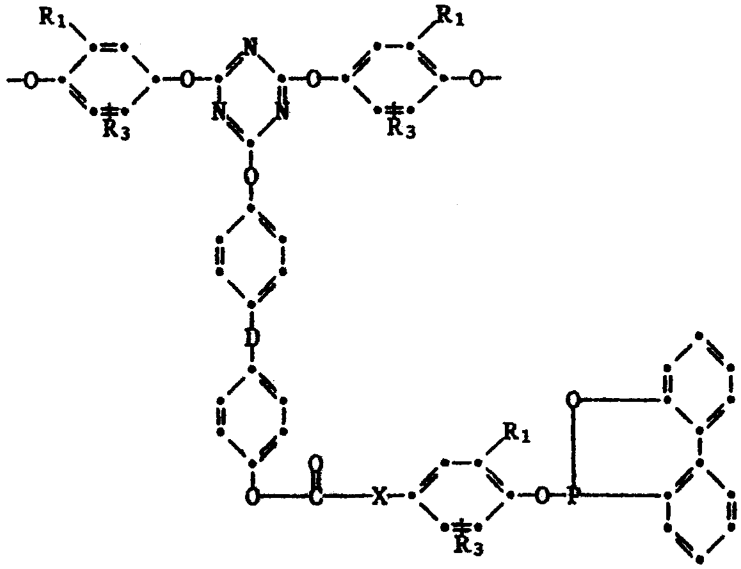

(VIII)

bedeutet, worin $R_1$, $R_3$, R', X, Y, Q, D und m die zuvor genannte Bedeutung haben.

Bevorzugt sind von den genannten Zusammensetzungen diejenigen, die mindestens eine Verbindung der

Formel I enthalten, in denen $R_2$ oder $R_3$ in der Formel II als $-X-CO-OAlkyl(C_1-C_{18})$ oder

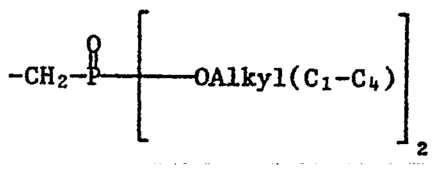

nicht in 4-Stellung steht, wenn die beiden anderen (Symbole) beide Alkyl oder Aralkyl bedeuten.

Die Verbindungen der Formel I werden in einer Menge von 1-400 Mol %, bevorzugt 20-100 Mol %, bezogen auf den Magentakuppler eingesetzt.

Die Verbindungen der Formel I wie auch Farbkuppler können in bekannter Weise in photographische Schichten eingearbeitet werden, z.B. in Silberhalogenidemulsionen, die Gelatine und/oder andere Bindemittel enthalten. Sie finden z.B. Anwendung in Silberbromid-, Siblerchlorid- oder Silberjodidemulsionen oder in Emulsionen, die Gemische von Silberhalogeniden enthalten, wie Silberbromid/jodid-oder Silberchlorid/bromid-Emulsionen. Die Emulsionen können chemisch sensibilisiert werden und auch übliche organische Stabilisatoren, oder deren Gemische, wie gehinderte Amine, phenolische Komponenten wie gehinderte Phenole, Alkoxyphenole, Aryloxyphenole, Hydroxycoumarane, Hydroxychromane oder Dihydroxyspirochromane, Disulphonamidophenole oder substituierte Hydrochinone (wie z.B. in DE-OS 2 417 867 und EP Patentanmeldung 69 070 beschrieben), substituierte Hydrochinon-monoether (wie z.B. in EP Patentanmeldung 98 241 beschrieben) und substituierte Hydrochinon-diether (wie z.B. in DE-OS 2 839 434 beschrieben), wobei synergistische Effekte erzielt werden können, ferner UV-Absorber, optische Aufheller und photographisch wirksame Verbindungen, ferner Antischleiermittel, Ver bindungen, welche photochemisch wirksame Produkte wie DIR-Verbindungen freisetzen können, sowie übliche Weichmacher, wie Glyzerin, enthalten. Die Farbkuppler und Dibenzoxaphosphorine sind normalerweise in hoch siedenden Lösungsmitteln gelöst. Diese Lösungsmittel haben einen Siedepunkt über 150°C und weisen ein Molekulargewicht zwischen 100 und 1000 auf. Beispielhaft seien erwähnt die organischen Amide, Carbonate, Ester, Ketone und Harnstoffderivate. Vorzugsweise verwendet man Di-n-butylphthalat, Di-octylphthalat, Tricresolphosphat, Trioctylphosphat, Di-i-octylazelainat, Di-n-butylsebacat, n-Nonylphenol oder deren Gemische. Die Emulsionen können auch mit für Gelatine üblichen Härtern gehärtet werden. Schliesslich können die Emulsionen auch übliche Beschichtungshilfsmittel enthalten. Die Emulsionen können auf übliche Trägermaterialien für photographisches Bildmaterial appliziart werden. Gegebenenfalls kann ein Gemisch verschiedener Kolloide verwendet werden, um die Silberhalogenide zu dispergieren. Die Emulsionen können ausser dem Magentakuppler auch andere Kuppler enthalten, welche allein oder in Gemischen Farbstoffe während der Entwicklung erzeugen, z.B. Gelb-, Cyan- oder Schwarz-Farbstoffe.

Zum Entwickeln des Bildmaterials für Farbphotographie können übliche Entwicklungsbäder eingesetzt werden. Diese Bäder enthalten in der Regel eine Entwicklungssubstanz des p-Phenyldiamin-Typs, einen Entwicklungsverzögerer, wie Kaliumbromid, ein Antioxidans, wie ein Salz der schwefligen Säure, z.B. Natriumsulfit und/oder Hydroxylamin und eine Base, z.B. ein Alkalimetallhydroxid oder Alkalimetallcarbonat. Die Entwicklungsbäder können auch übliche Antischleiermittel, Komplexiermittel, Benetzungsmittel, optische Aufheller und sonstiges enthalten.

Entsprechende Anwendungsmöglichkeiten sind z.B. in den US-Patentschriften 2.304.939, 2.304.940, 2.322.027, 2.284.879, 2.801.170, 2.801.171, 2.749.360 und 2.825.382 beschrieben.

Das zu stabilisierende photographische Material enthält die üblicherweise zum Einsatz kommenden Magentakuppler wie sie z.B. in T.H. James,The Theory of the Photographic Process, 4th Edition, Macmillen, New York, N.Y., (1977) Seiten 356-358 sowie in der US-PS 3 676 137 beschrieben sind, wie z.B. die des Pyrazolon-Typs, insbesondere 1-(substituiertes Phenyl)-3-anilino-, -3-benzanilido-und -3-ureido-pyrazolin-5-on. Bei diesen Kupplern kann es sich um Zwei- oder Vieräquivalent-Kuppler handeln.

Bevorzugt verwendet man Magentakuppler der Formel

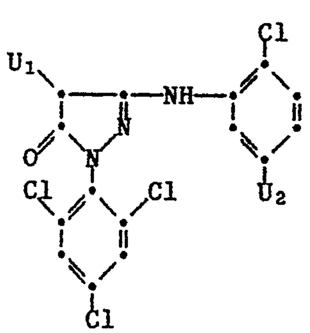

worin $U_1$ Wasserstoff oder eine Gruppe bedeutet, welche während der Entwicklung frei bleibt, wie z.B.

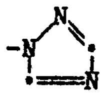 oder 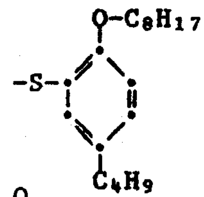,

und $U_2$ für eine Gruppe 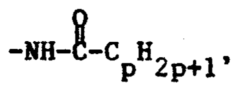, 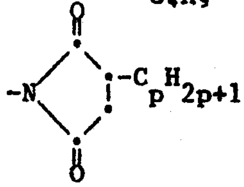 oder

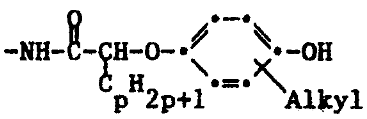 steht, wobei p eine Zahl von 1-18 ist.

Die nachfolgenden Beispiele erläutern die Erfindung.

## Herstellungsbeispiele

**Beispiel 1:** Herstellung von

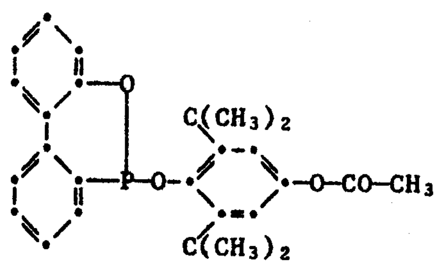

5,0 g 4-Acetoxy-2,6-di-t-butylphenol werden in 50 ml Essigsäureäthylester gelöst, und es werden 4,4 g 6-Chloro-dibenz-[c,e][1,2]-oxaphosphorin sowie 3,0 g Triäthylamin der Lösung zugegeben. Das Reaktionsgemisch wird während 2 Stunden bei Raumtemperatur und 4 Stunden bei 60°C gerührt, anschliessend auf Raumtemperatur abgekühlt und filtriert. Die organische Phase wird mit Wasser gewaschen, getrocknet und eingedampft. Das zurückbleibende Oel wird über Aluminiumoxid mit Petroläther/Essigsäureäthylester (19:1) als Laufmittel chromatographiert. Der so erhaltene farblose Feststoff wird mehrmals aus Petroläther umkristallisiert.

Man erhält 4,3 g von 4-Acetoxy-(dibenz-[c,e][1,2]-oxaphosphorin-6-yl-oxy)-3,5-di-t-butylbenzol als farbloser Feststoff mit Smp. 175 - 176°C.

**Beispiel 2:** Herstellung von

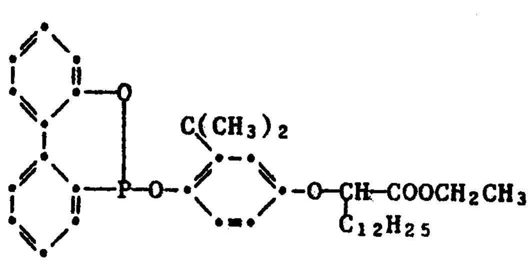

5,0 g 2-(3-t-Butyl-4-hydroxyphenoxy)-tetradecansäureäthylester werden in 50 ml Essigsäureäthylester gelöst, und es werden 3,9 g 6-Chloro-dibenz-[c,e][1,2]-oxaphosphorin sowie 2,1 g Triäthylamin der Lösung zugegeben. Das Reaktionsgemisch wird während 5 Stunden zum Rückfluss erhitzt und anschliessend wie in

Beispiel 1 aufgearbeitet. Man erhält 6,3 g von 2-[(3-t-Butyl-4-dibenz-[c,e][1,2]-oxaphosphorin-6-yl-oxy)-phenoxy]-tetradecansäureäthylester als farbloses Oel.

**Beispiel 3: Herstellung von**

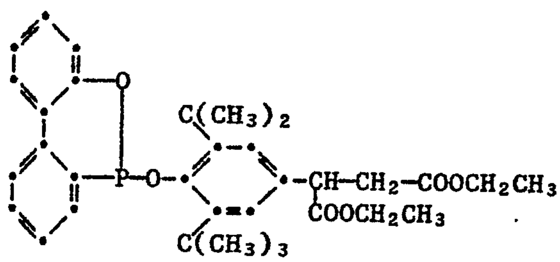

5,0 g (3.5-Di-t-butyl-4-hydroxyphenyl)bernsteinsäurediäthylester werden in 200 ml Essigsäureäthylester gelöst, und es werden 3,1 g 6-Chloro-dibenz-[c,e[[1,2]-oxphosphorin sowie 2,0 g Triäthylamin der Lösung zugegeben. Das Reaktionsgemisch wird während 2 Stunden zum Rückfluss erhitzt und anschliessend wie in Beispiel 1 aufgearbeitet. Das zurückbleibende gelbliche Oel wird über Alox mit Petroläther/Essigsäureäthylester (9:1) als Laufmittel chromatographiert. Man erhält 4,5 g von 4-[(Dibenz-[c,e][1,2]-oxaphosphorin-6-yl-oxy)-3,5-di-t-butylphenyl]-bernsteinsäurediäthylester als gelbliches Oel.

In analoger Weise wurden die folgenden Verbindungen hergestellt:

| Verbindung Nr. | Charakteristika |
|---|---|
| 4 | Smp: 103°C |
| 8 | Smp: 84°C |
| 9 | Smp: 94°C |
| 16 | Smp: 169°C |
| 17 | Smp: 163°C |
| 18 | Oel |
| 19 | Smp: 211°C |
| 26 | Oel |
| 27 | Oel |
| 32 | Oel |
| 33 | Oel |
| 34 | Oel |
| 35 | Oel |
| 36 | Oel |
| 37 | Oel |

Anwendungsbeispiele:

Beispiel 4: 0,097 g des Magentakupplers der Formel

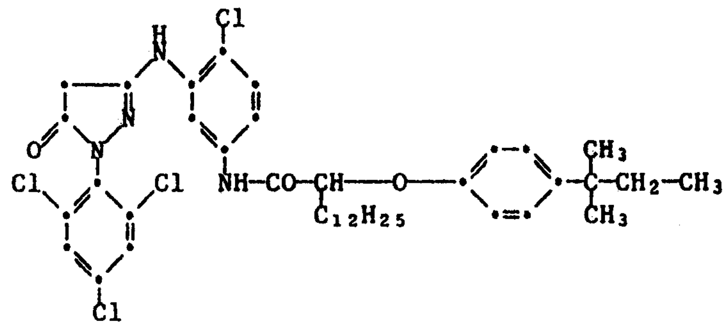

und 0,034 g eines der in der nachfolgenden Tabelle angegebenen erfindungsgemäss einzusetzenden Stabilisatoren werden in 5 ml eines Gemisches von Trikresylphosphat/Aethylacetat (0,97 g in 100 ml) gelöst. 1 ml dieser Lösung wird mit 9 ml einer 2,3 %igen Gelatinelösung die 0,436 g/l Netzmittel der Formel

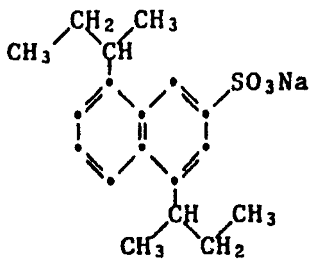

enthält und auf ein pH von 6,5 eingestellt ist, 3 Minuten im Eiswasserbad mit Ultraschall bei einer Leistung von 75 Watt emulgiert. 5 ml dieser Emulsion werden mit 2 ml einer Silberbromidemulsion, welche ein Silbergehalt von 6 g pro Liter Emulsion hat und 1 ml einer 0,7 %igen wässrigen Lösung des Härters der Formel

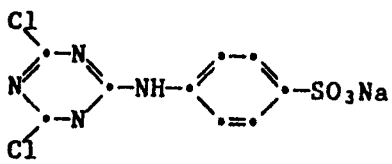

vermischt und auf ein kunststoffbeschichtetes Papier vom Format 13 x 18 cm gegossen.

Nach dem Erstarren wird in einem Trockenschrank mit Umluft bei Raumtemperatur getrocknet. Nach 7 Tagen wird dieser Handguss hinter einem Stufenkeil mi 33 Lux•sec belichtet und anschliessend im Ektaprint 2®-Prozess der Firma Kodak verarbeitet.

Die so erhaltenen Magentakeile werden in einem Klima-Schrank bei 75° C und 60 % relative Luftfeuchtigkeit 21 Tage gelagert. Durch Messungen am Anfang und am Ende der Behandlung bestimmt man die Klimavergilbung nach der Formel

Klimavergilbung = $D_{min}$ (Blau)$_{21\ Tage}$ - $D_{min}$ (Blau)$_{0\ Tage}$

mit Hilfe eines Macbeth Densitometers TR 924® im Blau-Kanal.

Die Resultate sind in der nachstehenden Tabelle aufgeführt.

| Verbindung Nr. | Klimavergilbung $D_{min}$ (Blau)$_{21}$ - $D_{min}$ (Blau)$_0$ |
|---|---|
| keine | 0,31 |
| 4 | 0,20 |
| 8 | 0,20 |
| 24 | 0,21 |
| 27 | 0,22 |
| 29 | 0,24 |
| 32 | 0,22 |
| 33 | 0,19 |
| 35 | 0,25 |

Beispiel 5:

Man geht wie in Beispiel 4 beschrieben vor. Die erhaltenen Magentakeile werden in einem Klima-Schrank bei 60°C und 60 % relativer Luftfeuchtigkeit während 28 Tagen gelagert und schliesslich die Klimavergilbung bestimmt.

| Verbindung Nr. | Klimavergilbung $D_{min}$(Blau)$_{28}$ - $D_{min}$(Blau)$_0$ |
|---|---|
| keine | 0,28 |
| 4 | 0,24 |
| 5 | 0,22 |
| 22 | 0,17 |
| 29 | 0,16 |
| 30 | 0,22 |

**Patentansprüche**

1. Verbindungen der Formel I

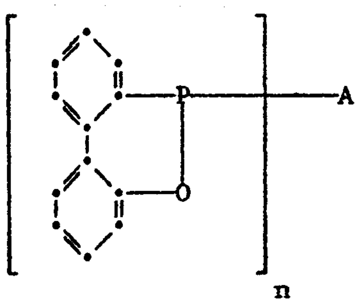

(I)

worin n die Zahl 1 oder 2 bedeutet und A, wenn n = 1 ist, eine Gruppe der Formel II

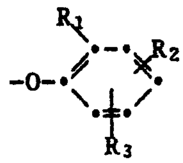

(II)

ist, worin $R_1$ einen Rest $Z_1$ bedeutet, wobei $Z_1$ für $C_1$-$C_{18}$Alkyl, $C_5$-$C_6$Cycloalkyl, Cl, Br, CN, $C_7$-$C_{21}$Aralkyl oder $C_2$-$C_8$Alkylen-CO-Y steht, oder $R_1$ $-CH_2-P(O)-(OR_{11})_2$ oder eine Gruppe der Formel

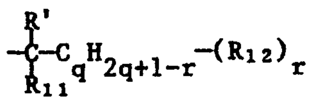

ist, worin R' Wasserstoff oder $C_1$-$C_4$Alkyl bedeutet, $R_{11}$ $C_1$-$C_4$Alkyl ist, $R_{12}$ Cl, Br, $-P(O)-(OR_{11})_2$, -SR'', -SO-R'', $-SO_2R''$, -CO-R'', $-NH-CO-NH_2$, $-NH-COOR_{11}$, $-SO_2-NH_2$, $-NH-SO_2-NH_2$, $-O-SO_2-R''$ oder $NO_2$ bedeutet, q eine Zahl von 1 bis 10 ist, und r 1 oder 2 bedeutet, oder
$R_1$ eine Gruppe der Formel III

$-X-C(O)-Y$ (III)

ist, worin X eine direkte Bindung, $-CH_2-$, $C_2$-$C_8$Alkylen, das mit einem Rest -CO-Y substituiert ist, -CH=CH-, -CH=C(C≡)- oder -CH=C(CO-Y)- bedeutet, und Y eine Gruppe $-OR_4$, $-N(R_5)(R_6)$ oder $C_1$-$C_4$Alkyl ist, oder wenn X eine direkte Bindung oder $-CH_2-$ ist, Y den Rest

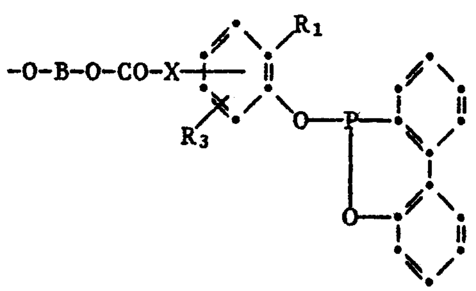

oder

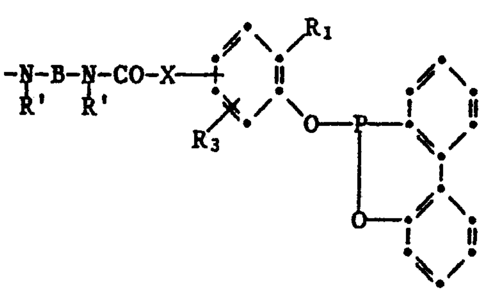

bedeutet, wobei X im Rest ebenfalls eine direkte Bindung oder $-CH_2-$ist, B ein ununterbrochenes oder ein- oder mehrmals durch -O-oder -S- unterbrochenes $C_1$-$C_{18}$Alkylen, eine Gruppe der Formel

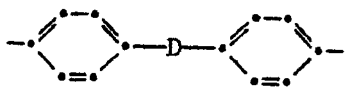

oder eine Gruppe der Formel

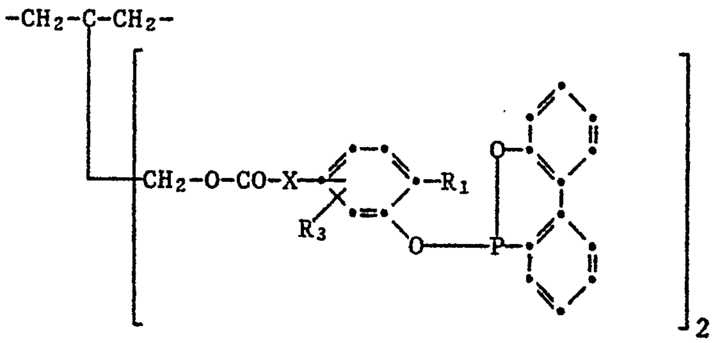

bedeutet,
$R_1$ und R' die zuvor genannte Bedeutung haben und D eine direkte Bindung, $-CH_2-$, $-C(CH_3)_2-$, -O- oder -CO- ist,
$R_2$ Wasserstoff, eine Gruppe $-OR_7$, $-SR_8$, -N(R')(R"), $-(CH_2)_m-OR_8$, $-(CH_2)_m-S-\overset{S}{\overset{\|}{C}}-N(R')_2$ oder eine Gruppe der Formeln

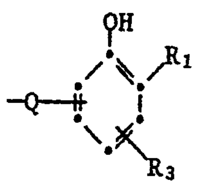

oder

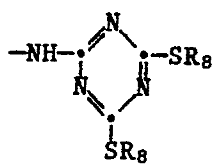

ist, oder $R_2$ die gleiche Bedeutung wie $R_1$ hat, wobei $R_7$ Wasserstoff, $C_1$-$C_4$Alkyl, -CO-R"', $-SO_2$-R"', -COOR"', -CO-N(R')(R"'), $C_1$-$C_{18}$Alkylen-$COOR_8$, $-CO-COOR_{13}$, $-Si(R_{13})_3$ oder die Gruppe

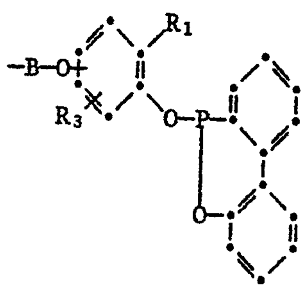

oder

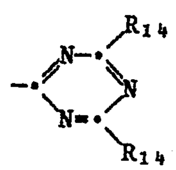

bedeutet, R' die zuvor genannte Bedeutung hat, R" $C_1$-$C_4$Alkyl, $-SO_2$-R"', -CO-R"' oder -COOR"' ist, R"' Wasserstoff, $C_1$-$C_{18}$Alkyl, Phenyl, Tolyl oder Benzyl ist, $R_8$ $C_1$-$C_{18}$Alkyl, $-CH_2-O-CH_3$, $-CH_2CH_2-COOR_4$, $C_3$-$C_8$Alkenyl, Phenyl oder Benzyl bedeutet, m eine Zahl von 1 bis 4 ist, Q eine direkte Bindung, -S-, -CH(R')-, $-CH_2-C(CO-Y)_2-CH_2-$ oder die Gruppe

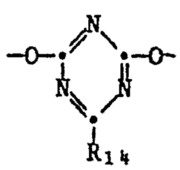

bedeutet, $R_{13}$ gleich oder verschieden ist und $C_1$-$C_{18}$Alkyl, $C_5$-$C_6$Cycloalkyl, Phenyl oder Benzyl bedeutet, und $R_{14}$ die Reste $-OR_4$, $-N(R_5)(R_6)$ oder $-SR_8$ bedeutet,
$R_3$ Wasserstoff ist oder die gleiche Bedeutung wie $R_1$ hat, wobei $R_2$ oder $R_3$ als -X-CO-OAlkyl($C_1$-$C_{18}$)

oder

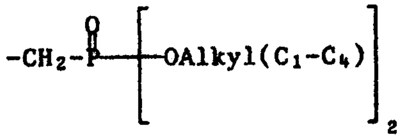

nicht in 4-Stellung steht, wenn die beiden anderen Substituenten beide Alkyl oder Aralkyl bedeuten. sowie
unter der Bedingung, dass, wenn $R_1$ einen Rest $Z_1$ darstellt, $R_2$ nicht gleichzeitig Wasserstoff, -OH, -OAlkyl($C_1$-$C_4$) oder $Z_1$ sein kann, und $R_3$ nicht gleichzeitig Wasserstoff oder $Z_1$ sein kann, oder
$R_2$ und $R_3$ zusammen einen zweiwertigen Rest $Z_2$ bilden, wobei $Z_2$ $C_3$-$C_8$Alkylen oder eine Gruppe

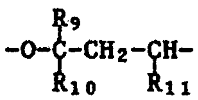

bedeutet und $R_9$, $R_{10}$ und $R_{11}$ unabhängig voneinander für $C_1$-$C_4$Alkyl stehen,
unter der Bedingung, dass, wenn $R_2$ und $R_3$ zusammen den Rest $Z_2$ bilden, $R_1$ nicht dem Rest $Z_1$ entspricht,
$R_4$ ein ununterbrochenes oder ein- oder mehrmals durch -O-unterbrochenes $C_1$-$C_{18}$Alkyl, ein Polyäthylenglykolrest, Phenyl, substituiertes Phenyl, oder Benzyl ist,
$R_5$ und $R_6$ unabhängig voneinander Wasserstoff, $C_1$-$C_{18}$Alkyl, Phenyl, substituiertes Phenyl, Benzyl oder eine Gruppe $-(CH_2)_m-OR_8$ bedeuten, und
A, wenn n = 2 ist, eine Gruppe der Formel IV

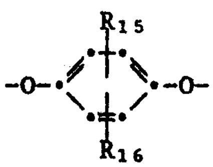

(IV)

bedeutet, worin $R_{15}$ und $R_{16}$ unabhängig voneinander $C_1$-$C_{18}$Alkyl oder eine Gruppe der Formel III sind, unter der Bedingung, dass mindestens einer der Reste $R_{15}$ und $R_{16}$ eine Gruppe der Formel III ist, oder
A eine Gruppe der Formeln V-VIII

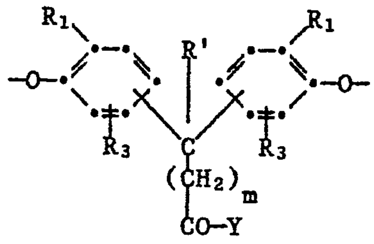

,

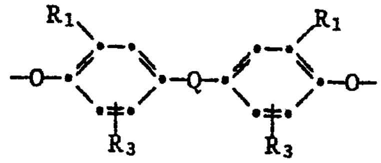

,

(V)

(VI)

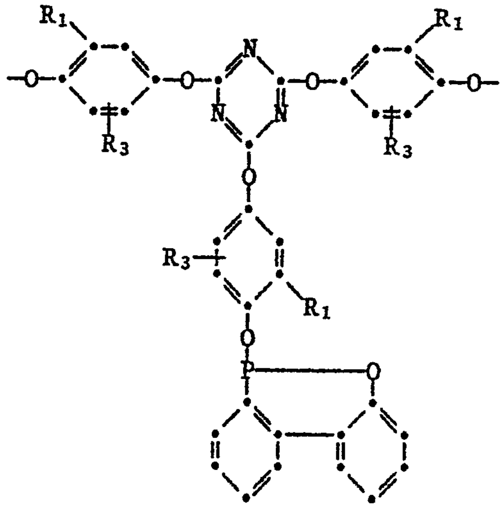

(VII)

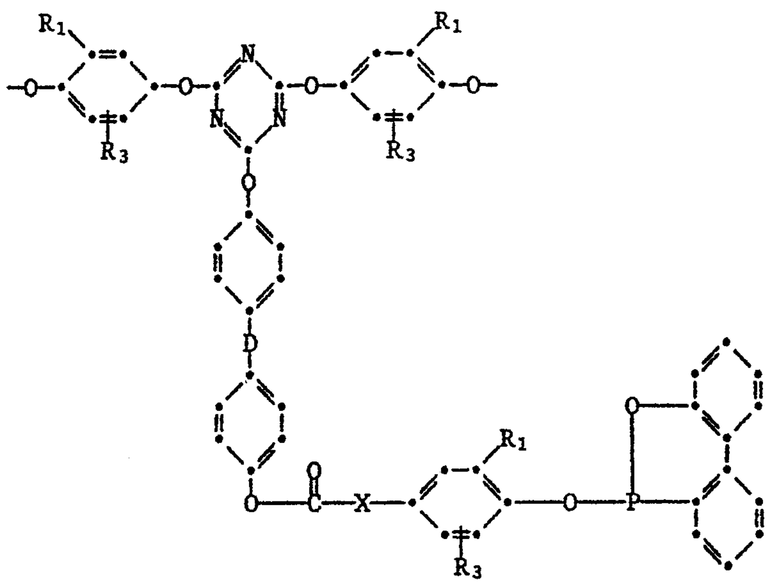

(VIII)

bedeutet, worin $R_1$, $R_3$, R', X, Y, Q, D und m die zuvor genannte Bedeutung haben.

2. Verbindungen gemäss Anspruch 1. dadurch gekennzeichnet, dass A, wenn n = 1 ist, eine Gruppe der Formel II

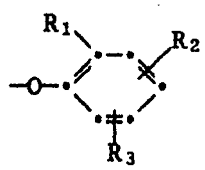

(II)

ist, worin $R_1$ einen Rest $Z_1$ bedeutet, wobei $Z_1$ für $C_1$-$C_{18}$Alkyl, $C_5$-$C_6$Cycloalkyl, Cl, Br, CN, $C_7$-$C_{21}$Aralkyl oder $C_2$-$C_8$Alkylen-CO-Y steht, oder $R_1$

$-CH_2-\overset{O}{\overset{\|}{P}}-(OR_{11})_2$

oder eine Gruppe der Formel

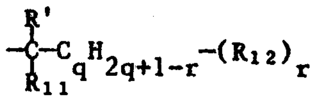

ist, worin R' Wasserstoff oder $C_1$-$C_4$Alkyl bedeutet,

$R_{11}$ $C_1$-$C_4$Alkyl ist, $R_{12}$ Cl, Br, $-\overset{O}{\overset{\|}{P}}-(OR_{11})_2$, -SR''', -SO-R''', $-SO_2R'''$, -CO-R''', $-NH-CO-NH_2$, $-NH-COOR_{11}$, $-SO_2-NH_2$, $-NH-SO_2-NH_2$, $-O-SO_2-R'''$ oder $NO_2$ bedeutet, q eine Zahl von 1 bis 10 ist, und r 1 oder 2 bedeutet, oder

$R_1$ eine Gruppe der Formel III

$-X-\overset{O}{\overset{\|}{C}}-Y$ (III)

ist, worin X eine direkte Bindung, $-CH_2-$, $C_2$-$C_8$Alkylen, das mit einem Rest -CO-Y substituiert ist, -CH=CH-, -CH=C(C≡N)- oder -CH=C(CO-Y)- bedeutet, und Y eine Gruppe $-OR_4$, $-N(R_5)(R_6)$ oder $C_1$-$C_4$Alkyl ist,

$R_2$ Wasserstoff, eine Gruppe $-OR_7$, $-SR_8$, -N(R')(R''), $-(CH_2)_m-OR_8$, $-(CH_2)_m-S-\overset{S}{\overset{\|}{C}}-N(R')_2$, eine Gruppe der Formeln

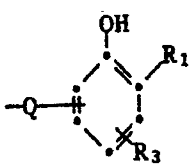

oder

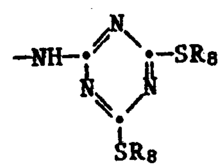

ist, oder $R_2$ die gleiche Bedeutung wie $R_1$ hat, wobei $R_7$ Wasserstoff, $C_1$-$C_4$Alkyl, -CO-R''', $-SO_2-R'''$, -COOR''', -CO-N(R')(R'''), oder $C_1$-$C_{18}$Alkylen-$COOR_8$ bedeutet, R' die zuvor genannte Bedeutung hat, R'' $C_1$-$C_4$Alkyl oder -CO-R''' ist, R''' Wasserstoff, $C_1$-$C_{18}$Alkyl, Phenyl oder Benzyl ist, $R_8$ $C_1$-$C_{18}$Alkyl bedeutet, m eine Zahl von 1 bis 4 ist, Q eine direkte Bindung, -S-, -CH(R')- oder $-CH_2-C(CO-Y)_2-CH_2-$bedeutet,

$R_3$ Wasserstoff ist oder die gleiche Bedeutung wie $R_1$ hat, wobei $R_2$ oder $R_3$ als -X-CO-OAlkyl($C_1$-$C_{18}$) oder $-CH_2-\overset{O}{\overset{\|}{P}}-[OAlkyl(C_1-C_4)]_2$ nicht in 4-Stellung steht, wenn die beiden anderen Substituenten beide Alkyl oder Aralkyl bedeuten, sowie unter der Bedingung, dass, wenn $R_1$ einen Rest $Z_1$ darstellt, $R_2$ nicht gleichzeitig Wasserstoff, -OH, -OAlkyl($C_1$-$C_4$) oder $Z_1$ sein kann, und $R_3$ nicht gleichzeitig Wasserstoff oder $Z_1$ sein kann,

$R_4$ ein ununterbrochenes oder ein- oder mehrmals durch -O-unterbrochenes $C_1$-$C_{18}$Alkyl, ein Polyäthylenglykolrest, Phenyl, substituiertes Phenyl, Benzyl oder eine Gruppe der Formel unter der Bedingung, dass wenn $R_1$ einen Rest $Z_1$ darstellt, $R_2$ nicht gleichzeitig Wasserstoff, -OH, -OAlkyl($C_1$-$C_4$) oder $Z_1$ sein kann, und $R_3$ nicht gleichzeitig Wasserstoff oder $Z_1$ sein kann,

$R_4$ ein ununterbrochenes oder ein- oder mehrmals durch -O-unterbrochenes $C_1$-$C_{18}$Alkyl, ein Polyäthylenglykolrest, Phenyl, substituiertes Phenyl, Benzyl oder eine Gruppe der Formel

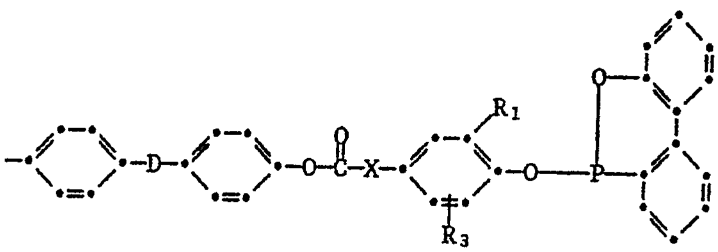

ist, worin $R_1$, $R_3$ und X die zuvor genannte Bedeutung haben, und D eine direkte Bindung, $-CH_2-$, $-C(CH_3)_2-$, -O- oder -CO- ist,
$R_5$ und $R_6$ unabhängig voneinander Wasserstoff, $C_1$-$C_{18}$Alkyl, Phenyl, Benzyl oder eine Gruppe $-(CH_2)_m-OR_8$ bedeuten, oder
A, wenn n = 2 ist, eine Gruppe der Formeln V-VII

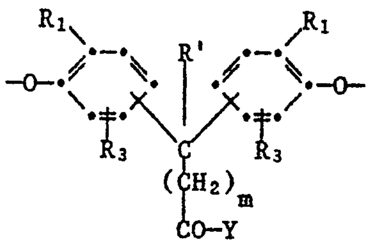

(V)

,

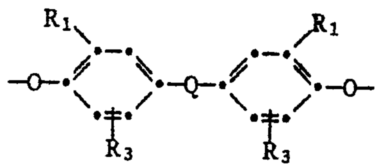

oder

(VI)

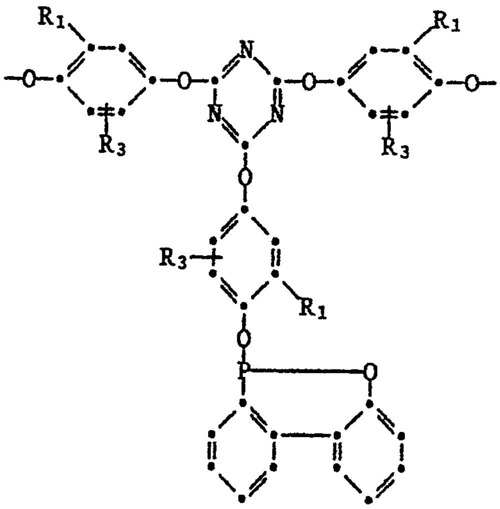

(VII)

bedeutet, worin $R_1$, $R_3$, R', Y, Q und m die zuvor genannte Bedeutung haben.

3. Verbindungen gemäss Anspruch 1, dadurch gekennzeichnet, das A, wenn n = 1 ist, eine Gruppe der Formel II bedeutet, worin $R_1$ eine Gruppe

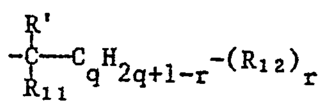

ist, und

$R_2$ und $R_3$ unabhängig voneinander Wasserstoff, $C_1$-$C_4$Alkyl oder eine Gruppe wie $R_1$ bedeuten.

4. Verbindungen gemäss Anspruch 1, dadurch gekennzeichnet, dass A, wenn n = 1 ist, eine Gruppe der Formel II bedeutet, worin $R_1$ $C_1$-$C_{18}$Alkyl, $C_5$-$C_6$Cycloalkyl, $C_7$-$C_{21}$Aralkyl oder $C_2$-$C_8$Alkylen-CO-Y ist und $R_2$ $-SR_8$, N(R')(R") oder $OR_7$ bedeutet, wobei $R_7$ für -CO-R"', $-SO_2$-R"', -COOR"', -CO-N(R')(R"), $C_1$-$C_8$Alkylen-$COOR_8$, -CO-CO-$OR_{13}$, $Si(R_{13})_3$ oder die Gruppe

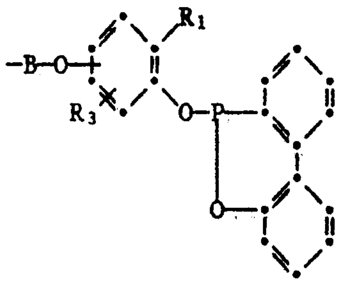

oder

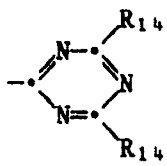

bedeutet, worin die Symbole Y, $R_8$, R', R", R'", $R_{13}$, $R_{14}$ und B die in Anspruch 1 genannte Bedeutung haben.

5. Verbindungen gemäss Anspruch 4, dadurch gekennzeichnet, dass $R_1$ $C_2$-$C_8$Alkylen-CO-Y bedeutet und $R_2$ für $OR_7$ steht, wobei Y -OAlkyl($C_1$-$C_{18}$) ist und $R_7$ -CO-R", -$SO_2$R"'. -COOR"', -CO-CO-$OR_{13}$ oder -Si($R_{13}$)$_3$ bedeutet. R"' $C_1$-$C_{18}$Alkyl, Phenyl, Tolyl oder Benzyl ist und $R_{13}$ unabhängig voneinander $C_1$-$C_{18}$Alkyl, Phenyl oder Benzyl ist.

6. Verbindungen gemäss Anspruch 1, dadurch gekennzeichnet, das sie der Formel

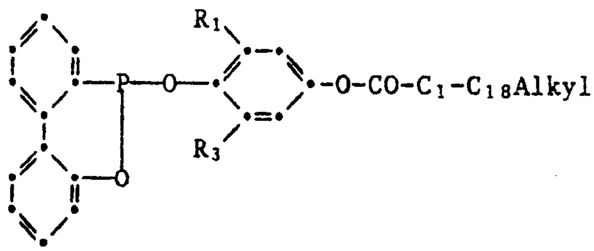

entsprechen, worin $R_1$ und $R_3$ die in Anspruch 1 genannte Bedeutung haben.

7. Verbindungen gemäss Anspruch 1, dadurch gekennzeichnet, dass sie der Formel

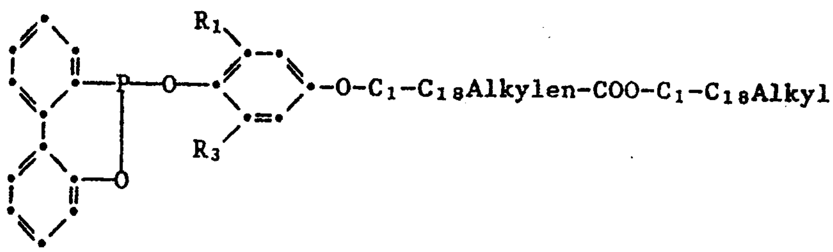

entsprechen, worin $R_1$ und $R_3$ die in Anspruch 1 genannte Bedeutung haben.

8. Verbindungen gemäss Anspruch 1, dadurch gekennzeichnet, dass A, wenn n = 2 ist, eine Gruppe der Formel VI bedeutet, worin $R_1$, $R_3$ und Q die in Anspruch 1 genannte Bedeutung haben.

9. Verbindungen gemäss Anspruch 1, dadurch gekennzeichnet, dass A, wenn n = 2 ist, eine Gruppe der Formel VII bedeutet. worin $R_1$, und $R_3$, die in Anspruch 1 genannte Bedeutung haben.

10. Verbindungen gemäss Anspruch 1, dadurch gekennzeichnet, dass A, wenn n = 2 ist, eine Gruppe der Formel VIII bedeutet. worin $R_1$, $R_3$, D und X die in Anspruch 1 genannte Bedeutung haben.

11. Verfahren zur Herstellung der Verbindungen der Formel I gemäss Anspruch 1, dadurch gekennzeichnet, dass man ein Phenol der Formel IX

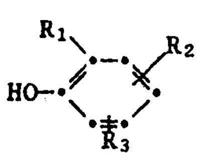

(IX)

oder ein Hydrochinon der Formel X

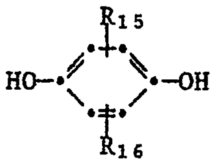

(X)

mit einem bzw. zwei Mol 6-Chlorodibenz-[c.e][1.2]-oxophosphorin unter Erhitzen umsetzt.

12. Zusammensetzung enthaltend ein photographisches Material, einen Magentakuppler und mindestens eine Verbindung der Formel I

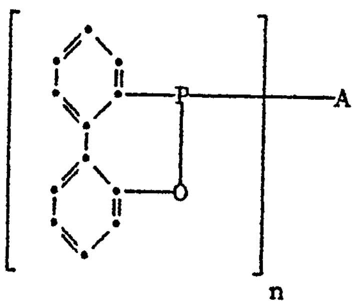

(I)

worin n die Zahl 1 oder 2 bedeutet und A, wenn n = 1 ist, eine Gruppe der Formel II

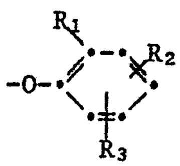

(II)

ist, worin $R_1$ einen Rest $Z_1$ bedeutet, wobei $Z_1$ für $C_1$-$C_{18}$Alkyl, $C_5$-$C_6$Cycloalkyl, Cl, Br, CN, $C_7$-$C_{21}$Aralkyl oder $C_2$-$C_8$Alkylen-CO-Y steht, oder $R_1$ $-CH_2-\overset{O}{\overset{\|}{P}}-(OR_{11})_2$ oder eine Gruppe der Formel

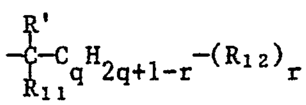

ist, worin R' Wasserstoff oder $C_1$-$C_4$Alkyl bedeutet,

$R_{11}$ $C_1$-$C_4$Alkyl ist, $R_{12}$ Cl, Br, $-\overset{O}{\overset{\|}{P}}-(OR_{11})_2$, -SR''', -SO-R''', $-SO_2R'''$, -CO-R''', $-NH-CO-NH_2$, $-NH-COOR_{11}$, $-SO_2-NH_2$, $-NH-SO_2-NH_2$, $-O-SO_2-R'''$ oder $NO_2$ bedeutet, q eine Zahl von 1 bis 10 ist, und r 1 oder 2 bedeutet, oder

$R_1$ eine Gruppe der Formel III

$-X-\overset{O}{\overset{\|}{C}}-Y$ (III)

ist, worin X eine direkte Bindung, $-CH_2-$, $C_2$-$C_8$Alkylen, das mit einem Rest -CO-Y substituiert ist, -CH=CH-, -CH=C(C≡N)- oder -CH=C(CO-Y)- bedeutet, und Y eine Gruppe $-OR_4$, $-N(R_5)(R_6)$ oder $C_1$-$C_4$Alkyl ist, oder wenn X eine direkte Bindung oder $-CH_2-$ ist kann Y den Rest

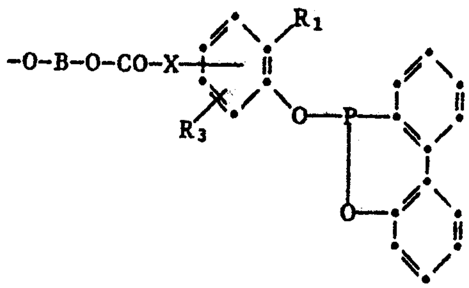

oder

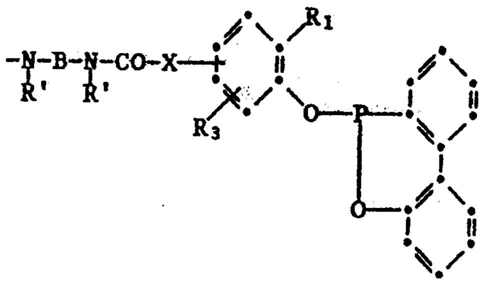

bedeuten, wobei X im Rest ebenfalls eine direkte Bindung oder $-CH_2$-ist, B ein ununterbrochenes oder ein- oder mehrmals durch -O-oder -S- unterbrochenes $C_1$-$C_{18}$Alkylen, eine Gruppe der Formel

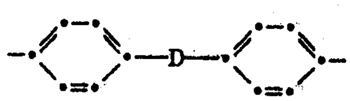

oder eine Gruppe der Formel

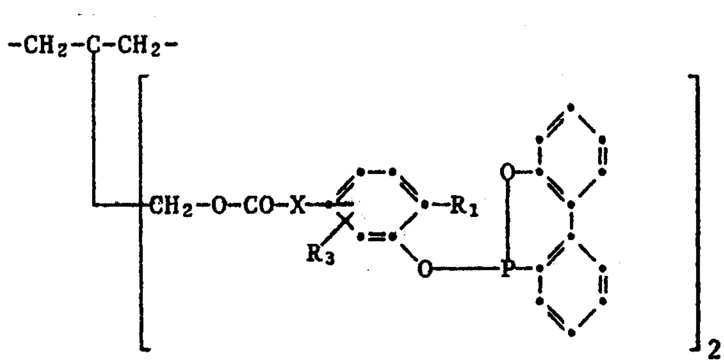

bedeutet,
$R_1$ und R' die zuvor genannte Bedeutung haben und D eine direkte Bindung, $-CH_2-$, $-C(CH_3)_2-$, -O- oder -CO- ist,

$R_2$ Wasserstoff, eine Gruppe $-OR_7$, $-SR_8$, -N(R')(R"), $-(CH_2)_m-OR_8$ $-(CH_2)_m-S-\overset{S}{\overset{\|}{C}}-N(R')_2$ oder eine Gruppe der Formeln

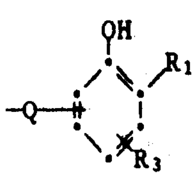

oder

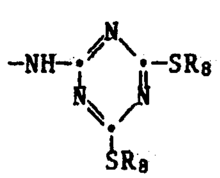

ist, oder $R_2$ die gleiche Bedeutung wie $R_1$ hat, wobei $R_7$ Wasserstoff, $C_1$-$C_4$Alkyl, -CO-R''', $-SO_2$-R''',

-COOR"', -CO-N(R')(R"1), $C_1$-$C_{18}$Alkylen-$COOR_8$, -CO-$COOR_{13}$, -Si$(R_{13})_3$ oder die Gruppe

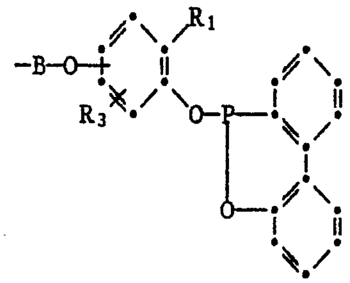

oder

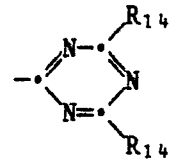

bedeutet, R' die zuvor genannte Bedeutung hat, R" $C_1$-$C_4$Alkyl, -$SO_2$-R"', -CO-R"' oder -COOR"' ist, R"' Wasserstoff, $C_1$-$C_{18}$Alkyl, Phenyl, Tolyl oder Benzyl ist, $R_8$ $C_1$-$C_{18}$Alkyl, -$CH_2$-O-$CH_3$, -$CH_2CH_2$-$COOR_4$, $C_3$-$C_8$Alkenyl, Phenyl oder Benzyl bedeutet, m eine Zahl von 1 bis 4 ist, Q eine direkte Bindung, -S-, -CH(R')-, -$CH_2$-C(CO-Y) $\overline{z}$ $CH_2$-oder die Gruppe

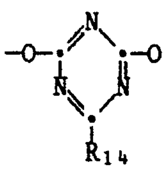

bedeutet, $R_{13}$ gleich oder verschieden ist und $C_1$-$C_{18}$Alkyl, $C_5$-$C_6$Cycloalkyl, Phenyl oder Benzyl bedeutet, und $R_{14}$ einen Rest -$OR_4$, -N$(R_5)(R_6)$ oder -$SR_8$ bedeutet,
$R_3$ Wasserstoff ist oder die gleiche Bedeutung wie $R_1$ hat,
unter der Bedingung, dass, wenn $R_1$ einen Rest $Z_1$ darstellt, $R_2$ nicht gleichzeitig Wasserstoff, -OH, -OAlkyl($C_1$-$C_4$) oder $Z_1$ sein kann, und $R_3$ nicht gleichzeitig Wasserstoff oder $Z_1$ sein kann, oder
$R_2$ und $R_3$ zusammen einen zweiwertigen Rest $Z_2$ bilden, wobei $Z_2$ $C_3$-$C_8$Alkylen oder eine Gruppe

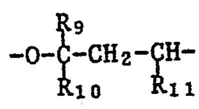

bedeutet und $R_9$, $R_{10}$ und $R_{11}$ unabhängig voneinander für $C_1$-$C_4$Alkyl stehen,
unter der Bedingung, dass, wenn $R_2$ und $R_3$ zusammen den Rest $Z_2$ bilden, $R_1$ nicht dem Rest $Z_1$ entspricht.
$R_4$ ein ununterbrochenes oder ein- oder mehrmals durch -O-unterbrochenes $C_1$-$C_{18}$Alkyl, ein Polyäthylenglykolrest, Phenyl substituiertes Phenyl, oder Benzyl ist,
$R_5$ und $R_6$ unabhängig voneinander Wasserstoff, $C_1$-$C_{18}$Alkyl, Phenyl, substituiertes Phenyl, Benzyl oder eine Gruppe -$(CH_2)$ $\overline{m}$ $OR_8$ bedeuten, und
A, wenn n = 2 ist, eine Gruppe der Formel IV

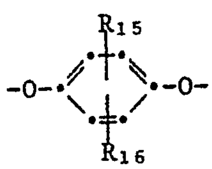

(IV)

bedeutet, worin $R_{15}$ und $R_{16}$ unabhängig voneinander $C_1$-$C_{18}$Alkyl oder eine Gruppe der Formel III sind, unter der Bedingung, dass mindestens einer der Reste $R_{15}$ und $R_{16}$ eine Gruppe der Formel III ist, oder
A eine Gruppe der Formeln V-VIII

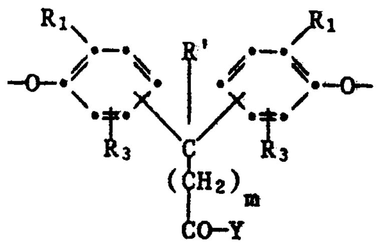

(V)

,

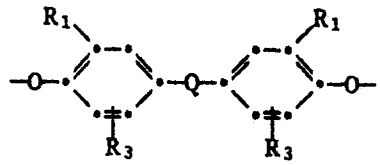

(VI)

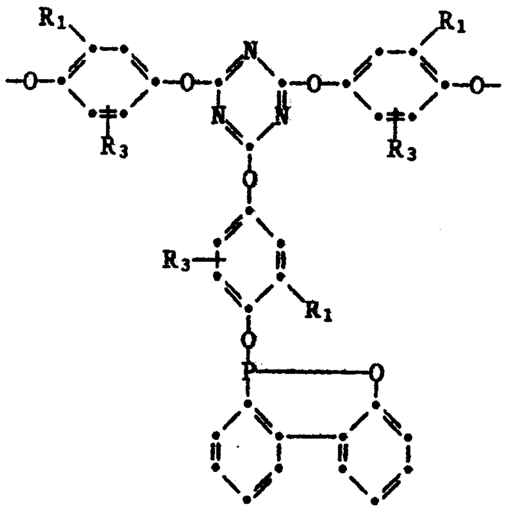

(VII)

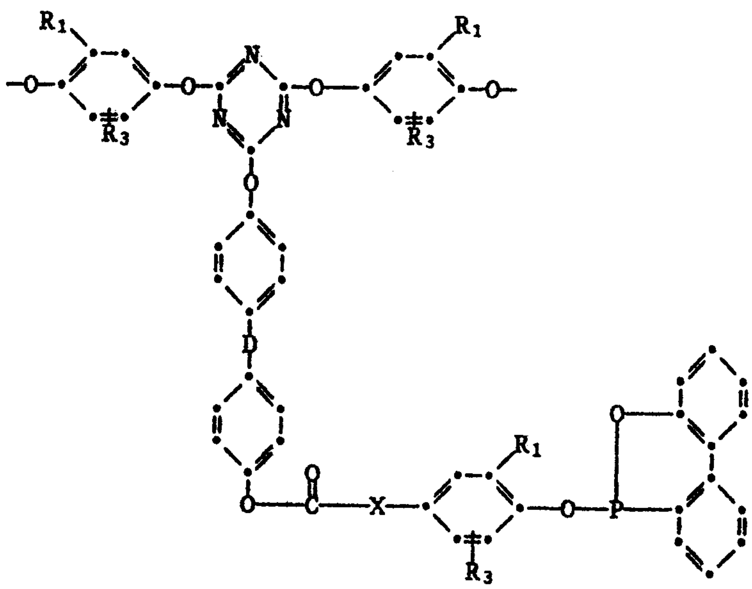

(VIII)

bedeutet, worin $R_1$, $R_3$, R', X, Y, Q, D und m die zuvor genannte Bedeutung haben.

13. Zusammensetzungen gemäss Anspruch 12, dadurch gekennzeichnet, dass sie mindestens eine

Verbindung der Formel I enthalten, in der $R_2$ oder $R_3$ in der Formel II als X-CO-OAlkyl($C_1$-$C_{18}$) oder

$$-CH_2-\overset{O}{\overset{\|}{P}}-\ OAlkyl(C_1-C_4)]_2$$

nicht in 4-Stellung steht, wenn die beiden anderen Symbole beide Alkyl oder Aralkyl bedeuten.

14. Verwendung von Verbindungen der Formel I gemäss Anspruch 1 als Stabilisatoren für Magentakuppler enthaltendes photographisches Material.

15. Verfahren zum Stabilisieren von Magentakuppler enthaltendem photographischem Material, dadurch gekennzeichnet, dass man in die den Magentakuppler enthaltende Emulsions- oder in eine an sie angrenzende Kolloidschicht mindestens eine Verbindung der Formel I gemäss Anspruch 1 einarbeitet.

Europäisches Patentamt

# EUROPÄISCHER RECHERCHENBERICHT

Nummer der Anmeldung

EP 86 81 0495

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl 4) |
|---|---|---|---|
| A | DE-A-2 926 897 (CIBA-GEIGY)<br>--- | 1 | C 07 F 9/48<br>C 07 F 9/65<br>G 03 C 1/10 |
| A | EP-A-0 056 787 (CIBA-GEIGY)<br>--- | 1 | |
| A,D | EP-A-0 000 352 (CIBA-GEIGY)<br>--- | 1 | |
| A | CHEMICAL ABSTRACTS, Band 98, Nr. 6, 7. Februar 1983, Seite 39, Spalte 2, Zusammenfassungsnr. 35523y, Columbus, Ohio, US; & JP - A - 57 105 456 (ASAHI-DOW LTD.) 30.06.1982<br>--- | 1 | |
| A | CHEMICAL ABSTRACTS, Band 98, Nr. 4, 24. Januar 1983, Seite 33, Spalte 1, Zusammenfassungsnr. 17527y, Columbus, Ohio, US; & JP - A - 57 105 454 (ASAHI-DOW LTD.) 30.06.1982<br>----- | 1 | RECHERCHIERTE SACHGEBIETE (Int. Cl.4)<br>C 07 F 9/48<br>C 07 F 9/65 |

Der vorliegende Recherchenbericht wurde für alle Patentansprüche erstellt

| Recherchenort | Abschlußdatum der Recherche | Prüfer |
|---|---|---|
| BERLIN | 22-01-1987 | KAPTEYN H G |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument